(19) Europäisches Patentamt
European Patent Office
Office européen des brevets

(11) **EP 3 971 600 B1**

(12) **FASCICULE DE BREVET EUROPEEN**

(45) Date de publication et mention de la délivrance du brevet:
**15.02.2023 Bulletin 2023/07**

(21) Numéro de dépôt: **21197108.0**

(22) Date de dépôt: **16.09.2021**

(51) Classification Internationale des Brevets (IPC):
**G01S 3/04** *(1968.09)*      **G01S 3/74** *(1968.09)*

(52) Classification Coopérative des Brevets (CPC):
**G01S 3/043; G01S 3/74**

(54) **PROCÉDÉ DE SÉPARATION DE SIGNAUX ÉLECTROMAGNÉTIQUES ET D'ESTIMATION DE LEURS DIRECTIONS D'ARRIVÉE DANS UN GONIOMÈTRE INTERFÉROMÉTRIQUE LARGE BANDE À RÉCEPTION NUMÉRIQUE SOUS-ÉCHANTILLONNÉE**

VERFAHREN ZUR TRENNUNG ELEKTROMAGNETISCHER SIGNALE UND ZUR SCHÄTZUNG IHRER ANKUNFTSRICHTUNGEN IN EINEM INTERFEROMETRISCHEN BREITBAND-GONIOMETER MIT UNTERABGETASTETEM DIGITALEM EMPFANG

METHOD FOR SEPARATING ELECTROMAGNETIC SIGNALS AND FOR ESTIMATING THEIR DIRECTION OF ARRIVAL IN A BROADBAND INTERFEROMETRIC GONIOMETER WITH SUB-SAMPLED DIGITAL RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2020 FR 2009410**

(43) Date de publication de la demande:
**23.03.2022 Bulletin 2022/12**

(73) Titulaire: **THALES**
**92400 Courbevoie (FR)**

(72) Inventeur: **LE MEUR, Anne**
**78851 ELANCOURT CEDEX (FR)**

(74) Mandataire: **Lavoix**
**2, place d'Estienne d'Orves**
**75441 Paris Cedex 09 (FR)**

(56) Documents cités:
**EP-A1- 3 671 250      EP-A1- 3 672 088**
**WO-A1-2017/109219**

**Description**

La présente invention concerne un procédé de séparation de signaux électromagnétiques et d'estimation des directions d'arrivée des signaux électromagnétiques dans un goniomètre interférométrique large bande à réception numérique sous-échantillonnée. La présente invention se rapporte également à un produit programme d'ordinateur, à un support d'informations et à un interféromètre pour la mise en oeuvre de ce procédé d'estimation.

Les systèmes d'écoute à très large bande instantanée permettent la réception, dans une très large bande instantanée, de signaux électromagnétiques.

Lorsqu'une précision angulaire sur la direction d'arrivée d'un signal électromagnétique incident est exigée, les systèmes d'écoute sont des interféromètres, c'est-à-dire des goniomètres fondés sur la réception du signal électromagnétique par un ensemble d'antennes à diversité spatiale.

Dans le présent document, on appelle signal d'intérêt un signal électromagnétique provenant d'une source, par opposition à du bruit seul.

Les signaux d'intérêt sont à bande étroite mais peuvent se trouver à des fréquences porteuses très variées. En conséquence, la bande de réception de l'interféromètre doit être très étendue.

Echantillonner cette bande de réception en respectant le critère de Nyquist-Shannon s'avère difficile car cela nécessiterait d'utiliser des composants de conversion analogique - numérique ultra rapides. Or, soit de tels composants ne sont pas encore disponibles sur l'étendue de la bande de fréquence à traiter, soit, lorsqu'ils sont disponibles, de tels composants ne satisfont pas les contraintes de poids, volume et/ou consommation permettant leur intégration dans un système d'écoute, notamment embarqué.

De plus, si de tels composants existaient, ils génèreraient un flux de données qui serait incompatible non seulement avec les débits des bus de transfert de données, mais aussi avec les capacités de traitement des calculateurs usuellement mis en oeuvre dans un module de traitement numérique.

Le document EP3671250 décrit un procédé de séparation et d'estimation des directions d'arrivée de signaux électromagnétiques mis en oeuvre par un goniomètre interférométrique à large bande de réception et à réception numérique sous-échantillonnée.

Pour contourner cette difficulté, on utilise un interféromètre d'un genre nouveau effectuant des échantillonnages à des fréquences d'échantillonnage $fe_m$, qui ne respectent pas le critère de Nyquist-Shannon, c'est-à-dire qui sont très inférieures au double de largeur de la bande de réception pour des signaux réels.

Ce sous-échantillonnage a l'avantage de lever les contraintes sur la conversion analogique - numérique. Cependant, sur chaque voie de réception (les voies étant indicées par un entier m entre 1 et M), il provoque le repliement de la bande de réception à traiter dans la bande $[-fe_m/2, fe_m/2]$.

Un signal reçu $S$, réel et à bande étroite, est caractérisé par le fait que son spectre est composé de deux motifs à support respectivement dans $\mathcal{R}^+$ et dans $\mathcal{R}^-$, appelés respectivement motif de bande latérale supérieure $S^+$ et motif de bande latérale inférieure $S^-$. Ces deux motifs possèdent une symétrie hermitienne l'un par rapport à l'autre. Après repliement, l'un des deux motifs se retrouve dans la première zone négative de Nyquist $[-fe_m/2, 0]$, et l'autre motif se retrouve dans la première zone positive de Nyquist $[0, fe_m/2]$.

Une conséquence du repliement spectral est que les fréquences mesurées dans la bande repliée $[-fe_m/2, fe_m/2]$ sont ambiguës. Cependant, un choix judicieux des valeurs des fréquences d'échantillonnage $fe_m$ d'une voie à l'autre permet de lever ces ambiguïtés.

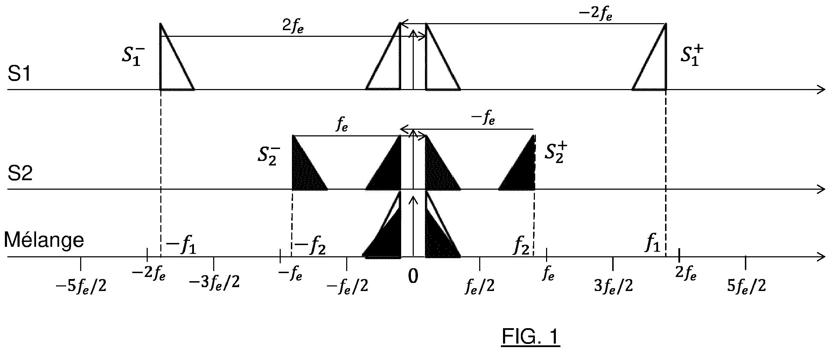

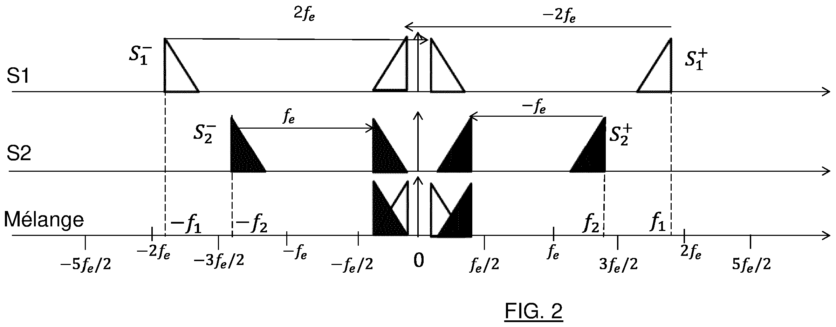

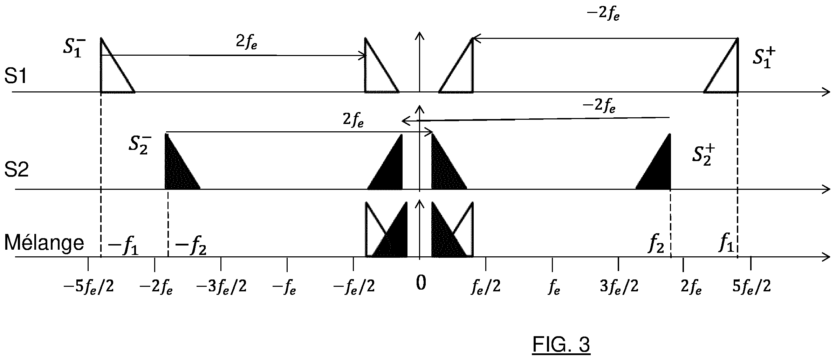

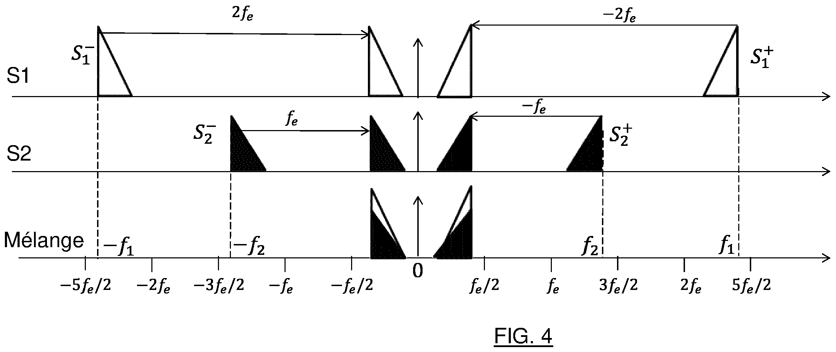

Une autre conséquence du repliement est que, comme cela est illustré sur les figures 1 à 4, deux (ou plus) signaux d'intérêt, $S_1$ et $S_2$, présents en même temps à des fréquences différentes $f_1$ et $f_2$ dans la bande de réception, peuvent se retrouver à des fréquences identiques ou proches dans la bande repliée $[-fe_m/2, fe_m/2]$ d'une des voies de réception. Cette situation de mélange est appelée parasitage.

Un parasitage se produit en fait lorsque les deux signaux d'intérêt ont des fréquences porteuses $f_1$ et $f_2$ dont la différence ou la somme est un multiple d'une des fréquences d'échantillonnage $fe_m$.

Le parasitage se traduit par un mélange partiel, c'est-à-dire par un mélange des deux signaux d'intérêt sur une partie seulement des voies de réception (en général une), mais jamais sur toutes les voies, puisque les deux signaux n'ont pas la même fréquence porteuse.

Les deux signaux sont d'intérêt. Cependant, le deuxième signal d'intérêt apparaît comme un parasite vis-à-vis du premier signal d'intérêt lorsqu'on cherche à estimer la direction d'arrivée du premier signal d'intérêt. De même, le premier signal d'intérêt apparaît comme un parasite vis-à-vis du deuxième signal d'intérêt lorsqu'on cherche à estimer la direction d'arrivée du deuxième signal d'intérêt.

Ainsi, en cas de parasitage, les mesures associées à un signal d'intérêt peuvent être entachées d'erreurs importantes, ce qui rend ensuite difficile l'estimation des différences de phase entre les antennes et par conséquent l'estimation de la direction d'arrivée des signaux d'intérêt.

Lesdits mélanges peuvent faire intervenir non seulement les motifs des bandes latérales supérieures des deux signaux en présence, mais aussi les motifs des bandes latérales inférieures des deux signaux en présence, ou encore le motif de la bande latérale supérieure d'un des deux signaux et le motif de la bande latérale inférieure de l'autre des deux signaux.

Ainsi par exemple, la figure 1 illustre le cas d'un mélange sur [-fe$_m$/2,0] de $S_1^+$ replié et de $S_2^+$ replié et d'un mélange sur [0, fe$_m$/2] de $S_1^-$ replié et de $S_2^-$ replié.

La figure 2 illustre le cas d'un mélange sur [-fe$_m$/2,0] de $S_1^+$ replié et de $S_2^-$ replié et d'un mélange sur [0, fe$_m$/2] de $S_1^-$ replié et de $S_2^+$ replié.

La figure 3 illustre le cas d'un mélange sur [-fe$_m$/2,0] de $S_1^-$ replié et de $S_2^+$ replié et d'un mélange sur [0, fe$_m$/2] de $S_1^+$ replié et de $S_2^-$ replié.

La figure 4 illustre le cas d'un mélange sur [-fe$_m$/2,0] de $S_1^-$ replié et de $S_2^-$ replié et d'un mélange sur [0, fe$_m$/2] de $S_1^+$ replié et de $S_2^+$ replié.

La séparation des sources et la détermination des directions d'arrivée pour des signaux mélangés se traite d'habitude, quand il s'agit de mélanges temporels ET fréquentiels (i.e. dans lesquels les signaux sont mélangés sur toutes les voies de réception), par des méthodes de traitement d'antenne (voir « Les méthodes haute résolution, traitement d'antenne et analyse spectrale » sous la direction de S. Marcos, éditions Hermès 1998).

Plusieurs obstacles s'opposent ici à la mise en oeuvre de telles méthodes. Notamment, en multisources, le grand nombre des mesures qu'il est nécessaire d'effectuer entraîne une augmentation de la probabilité de mélanges, et par conséquent de la quantité de calculs, qui peut être rédhibitoire dans certaines applications.

Les méthodes de « Compressive Sensing » (voir « Compressive sampling », Candès, Proceedings of the International Congress of Mathematicians, Madrid 2006), débouchent sur des algorithmes itératifs, inadaptés pour les applications temps réel et/ou embarquées.

On pourrait chercher à appliquer les traitements connus pour des signaux complexes en utilisant le signal analytique complexe dérivé du signal réel.

En effet, puisque, dans le signal analytique, le motif de bande latérale inférieure a été supprimé, il ne peut plus interférer avec le motif de bande latérale supérieure.

Le signal analytique peut être obtenu analogiquement à partir des composantes I et Q du signal réel, à l'aide d'une démodulation en double quadrature de ce dernier.

Cependant, à l'heure actuelle, il n'existe pas de composants capables de réaliser cette opération au-delà d'une bande de quelques GHz. La difficulté est de maîtriser parfaitement l'écart de phase de 90° entre la voie I et la voie Q, et d'équilibrer l'amplitude du signal sur les deux voies.

Une autre méthode pour obtenir le signal analytique est de réaliser une transformée de Hilbert numérique. Cependant, cette transformation serait appliquée sur le signal réel sous-échantillonné, c'est-à-dire après la formation de mélanges éventuels.

Le but de la présente invention est par conséquent de proposer un procédé de séparation de sources et d'estimation des directions d'arrivée pour traiter le cas d'un signal réel pour lequel on ne dispose pas du signal analytique correspondant et qui est parasité par un autre signal réel.

Pour cela l'invention a pour objet un procédé de séparation et d'estimation des directions d'arrivée de signaux électromagnétiques mis en oeuvre par un goniomètre interférométrique à large bande de réception et à réception numérique sous-échantillonnée, ledit goniomètre interférométrique comportant M voies de réception, M étant un entier supérieur ou égal à quatre, chaque voie de réception comportant successivement une antenne, un module de réception analogique et un module de réception numérique, le module de réception numérique fonctionnant à une fréquence d'échantillonnage qui lui est propre et délivrant périodiquement une grille temps-fréquence par analyses spectrales successives, chaque case de la grille temps/fréquence contenant une mesure complexe, caractérisé en ce que, dans une situation de parasitage d'un premier signal réel par un second signal, le premier signal et le second signal ayant des fréquences porteuses dont la différence ou la somme est proche d'un multiple de la fréquence d'échantillonnage d'une voie parmi les voies de réception, dite voie de mélange, les autres voies parmi les voies de réception étant dites voies sans mélange, le procédé comporte les étapes consistant à : définir des domaines temps/fréquence dans l'espace temps/fréquence, chaque domaine correspondant au produit cartésien d'un intervalle temporel égal à la durée de quelques analyses spectrales successives, par un intervalle fréquentiel égal à quelques canaux de l'analyse spectrale, chaque domaine étant replié sur une fenêtre d'une bande repliée associée à la voie de réception m, chaque fenêtre comportant *L* cases, le domaine du premier signal étant dit premier domaine, et le domaine du second signal étant dit second domaine ; prélever, dans les M grilles temps/fréquence délivrées à un instant courant par chacune des voies de réception, les mesures des cases des fenêtres associées au premier domaine et les mesures des cases des fenêtres associées au second domaine et élaborer des vecteurs de mesure à partir des mesures prélevées de telle sorte que : les mesures du premier signal sur les voies sans mélange soient mises sous la forme de L premiers vecteurs de mesures ; les mesures du second signal sur les voies sans mélange soient mises sous la forme de L seconds vecteurs de mesures ; et les mesures sur la voie de mélange correspondent à L scalaires ; estimer les amplitudes complexes, à un coefficient de normalisation près, du premier signal, et le vecteur directionnel réduit aux voies sans mélange et normalisé du premier signal, uniquement à partir des L premiers vecteurs de mesure ; estimer les amplitudes complexes, à un coefficient de normalisation près, du second signal, et le vecteur directionnel réduit aux voies sans mélange et normalisé du second signal, uniquement à partir des L seconds vecteurs de mesure ; calculer les phases interférométriques des premier et second signaux sur la voie de mélange à partir des amplitudes complexes estimées pour les premier et second signaux et à partir des mesures sur la voie de mélange, en considérant que les mesures sur la voie de mélange correspondent à la superposition : soit dans un premier cas du motif de la bande latérale inférieure du premier signal et du motif de la bande latérale inférieure du second signal; soit dans un deuxième cas du motif de la bande latérale inférieure du premier signal et du motif de la bande latérale supérieure du second signal ; soit dans un troisième cas du motif de la bande latérale supérieure du premier signal et du motif de la bande latérale inférieure du second signal ; soit dans un quatrième cas du motif de la bande latérale supérieure du premier signal et du motif de la bande latérale supérieure du second signal, et calculer le module du vecteur directionnel réduit aux voies sans mélange, et l'amplitude de la composante du vecteur directionnel sur la voie de mélange, pour le premier et le second signal respectivement ; et, déterminer la direction d'arrivée des premiers et seconds signaux respectivement à partir des phases interférométriques ou à partir des vecteurs directionnels estimés pour les premier et second signaux.

Suivant des modes particuliers de réalisation, le procédé comporte une ou plusieurs des caractéristiques suivantes, prises isolément ou suivant toutes les combinaisons techniquement possibles :

- dans l'étape d'élaboration : si les mesures sur une voie sans mélange correspondent au motif de la bande latérale inférieure du premier signal, respectivement du second signal, les vecteurs de mesure élaborés à partir desdites mesures contiennent les complexes conjugués desdites mesures ; et, si les mesures sur une voie sans mélange correspondent au motif de la bande latérale supérieure du premier signal, respectivement du second signal, les vecteurs de mesure élaborés à partir desdites mesures contiennent lesdites mesures.

- les étapes d'estimation des premier et second signaux sur les M - 1 voies sans mélange sont fondées sur les équations suivantes :

$$\begin{cases} CX_l = s_l U_1 + W_{1l} \\ CZ_l = s'_l U_2 + W_{3l} \end{cases}, l \in [1, L]$$

où : $CX_l$ sont les premiers vecteurs de mesures ; $CZ_l$ sont les seconds vecteurs de mesures ; $s_l$ et $s'_l$ sont les amplitudes complexes du premier signal et du second signal respectivement ; $U_1$ et $U_2$ sont les vecteurs directionnels réduits aux voies sans mélange ; et $W_{1l}$, $W_{3l}$ sont des bruits gaussiens, centrés, indépendants en 1 et entre eux.

- $U_1$ et $U_2$ n'étant pas normés, des vecteurs $A_1$ et $A_2$ normés et les réels positifs $\mu_1$ et $\mu_2$ sont introduits, tels que $U_1 = \mu_1 A_1$ , $U_2 = \mu_2 A_2$, et les étapes d'estimation consistent à : diagonaliser la matrice $Cov_1$ définie comme :

$Cov_1 = \sum_{l=1}^{L}(CX_l)(CX_l^*)$ ; déterminer le vecteur propre associée à la plus grande valeur propre de la matrice $Cov_1$ en tant qu'estimée $\hat{A}_1$ du vecteur $A_1$ ; déterminer les amplitudes complexes $s_l$ du premier signal, filtrées sur les M - 1 voies sans mélange, à un facteur réel positif près, $\mu_1$, en calculant les grandeurs $\xi_l$ à partir du produit scalaire hermitien des vecteurs $\hat{A}_1$ et $CX_l$, selon la relation : $\xi_l = \hat{A}_1^* CX_l (= \widehat{\mu_1 s_l})$ ; diagonaliser la matrice $Cov_2$

définie comme : $Cov_2 = \sum_{l=1}^{L}(CZ_l)(CZ_l^*)$ ; déterminer le vecteur propre associée à la plus grande valeur propre de la matrice $Cov_2$ en tant qu'estimée $\hat{A}_2$ du vecteur $A_2$ ; déterminer les amplitudes complexes $s'_l$ du second signal, filtrées sur les M - 1 voies sans mélange, à un facteur réel positif près, $\mu_2$, en calculant les grandeurs $\eta_l$ à partir du produit scalaire hermitien des vecteurs $\hat{A}_2$ et $CZ_l$, selon la relation : $\eta_l = \hat{A}_2^* CZ_l (= \widehat{\mu_2 s'_l})$ .

- calculer les phases interférométriques $\varphi$ et $\psi$ sur la voie de mélange, respectivement du premier signal et du second signal, consiste à estimer le couple de grandeurs $z_1$, $z_2$ , qui sont définies par : dans le premier cas : $z_1 = \dfrac{v_1 e^{-i\varphi}}{\mu_1}$ et $z_2 = \dfrac{v_2 e^{-i\psi}}{\mu_2}$ , dans le deuxième cas : $z_1 = \dfrac{v_1 e^{-i\varphi}}{\mu_1}$ et $z_2 = \dfrac{v_2 e^{+i\psi}}{\mu_2}$ , le troisième cas : $z_1 = \dfrac{v_1 e^{+i\varphi}}{\mu_1}$ et $z_2 = \dfrac{v_2 e^{-i\psi}}{\mu_2}$ , dans le quatrième cas : $z_1 = \dfrac{v_1 e^{+i\varphi}}{\mu_1}$ et $z_2 = \dfrac{v_2 e^{+i\psi}}{\mu_2}$ , où $v_1$ et $v_2$ sont l'amplitude de la composante du vecteur directionnel sur la voie de mélange, respectivement du premier signal et du second signal, en recherchant le couple $\hat{z}_1$, $\hat{z}_2$ qui minimise l'erreur quadratique : $|y_l - z_1\xi_l - z_2\eta_l|^2$, où les $y_l$ sont les mesures sur la voie de mélange.

- après l'étape d'estimation des phases interférométriques des premier et second signal, le procédé comporte en outre une étape consistant à estimer, l'amplitude $\mu_1$, respectivement l'amplitude $\mu_2$, du vecteur directionnel du premier signal, respectivement du deuxième signa, réduit aux voies sans mélange, et l'amplitude $v_1$, respectivement l'amplitude $v_2$, de la composante du vecteur directionnel du premier signal, respectivement du deuxième signal, sur la voie de mélange : $\hat{\mu}_1 = \dfrac{1}{\sqrt{1+|\hat{z}_1^2|}}$, $\hat{v}_1 = \dfrac{|\hat{z}_1|}{\sqrt{1+|\hat{z}_1^2|}}$, $\hat{\mu}_2 = \dfrac{1}{\sqrt{1+|\hat{z}_2^2|}}$ et $\hat{v}_2 = \dfrac{|\hat{z}_2|}{\sqrt{1+|\hat{z}_2^2|}}$ .

- le procédé consiste à calculer les estimations des vecteurs directionnels normés selon les relations : dans le premier cas : $\widehat{V}_1 = \begin{pmatrix} \hat{\mu}_1 \widehat{A}_1 \\ \hat{v}_1 e^{-i\hat{\varphi}} \end{pmatrix}$, $\widehat{V}_2 = \begin{pmatrix} \hat{\mu}_2 \widehat{A}_2 \\ \hat{v}_2 e^{-i\hat{\psi}} \end{pmatrix}$ , dans le deuxième cas : $\widehat{V}_1 = \begin{pmatrix} \hat{\mu}_1 \widehat{A}_1 \\ \hat{v}_1 e^{-i\hat{\varphi}} \end{pmatrix}$, $\widehat{V}_2 = \begin{pmatrix} \hat{\mu}_2 \widehat{A}_2 \\ \hat{v}_2 e^{i\hat{\psi}} \end{pmatrix}$ , dans le troisième cas : $\widehat{V}_1 = \begin{pmatrix} \hat{\mu}_1 \widehat{A}_1 \\ \hat{v}_1 e^{i\hat{\varphi}} \end{pmatrix}$, $\widehat{V}_2 = \begin{pmatrix} \hat{\mu}_2 \widehat{A}_2 \\ \hat{v}_2 e^{-i\hat{\psi}} \end{pmatrix}$ , dans le quatrième cas : $\widehat{V}_1 = \begin{pmatrix} \hat{\mu}_1 \widehat{A}_1 \\ \hat{v}_1 e^{i\hat{\varphi}} \end{pmatrix}$, $\widehat{V}_2 = \begin{pmatrix} \hat{\mu}_2 \widehat{A}_2 \\ \hat{v}_2 e^{i\hat{\psi}} \end{pmatrix}$ .

L'invention a également pour objet un produit programme d'ordinateur, comportant des instructions propres lorsqu'elles sont exécutées par un ordinateur à mettre en oeuvre le procédé précédent.

L'invention a également pour objet goniomètre interférométrique, ledit goniomètre comportant M voies de réception, M étant un entier supérieur ou égal à quatre, chaque voie de réception comportant successivement une antenne, un module de réception analogique et un module de réception numérique, le module de réception numérique fonctionnant à une fréquence d'échantillonnage qui lui est propre et délivrant périodiquement une grille temps-fréquence, chaque case de la grille temps/fréquence contenant une mesure complexe, l'espace temps/fréquence étant subdivisé en domaines, un domaine étant replié sur une fenêtre d'une bande repliée associée à la voie de réception $m$, une fenêtre comportant $L$ cases, caractérisé en ce qu'il est adapté pour exécuter les instructions du produit programme d'ordinateur précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- Les figures 1 à 4 illustrent différentes situations de mélanges entre les motifs de deux signaux réels ;

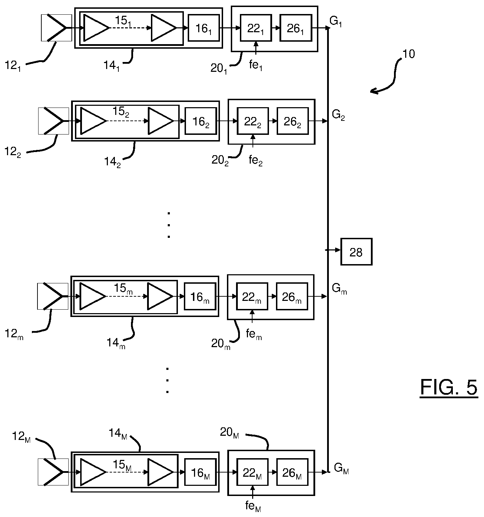

- La figure 5 est une représentation schématique d'un interféromètre adapté pour mettre en oeuvre le procédé selon l'invention ;

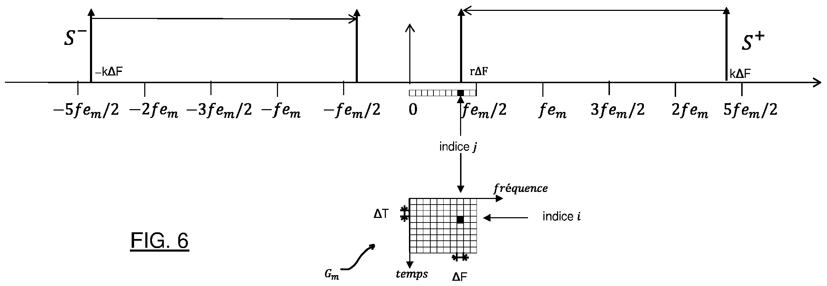

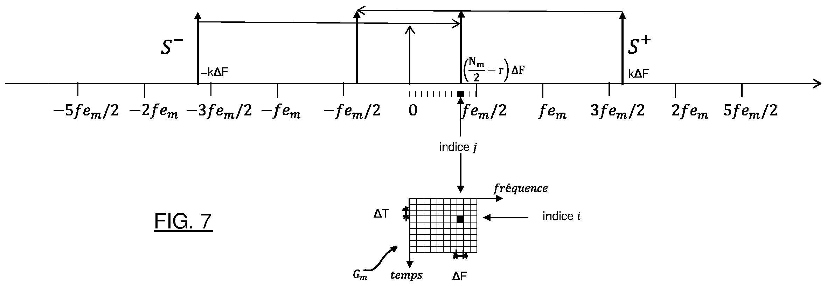

- Les figures 6 et 7 illustrent la manière d'obtenir une grille temps-fréquence en sortie de la voie de réception d'indice m, la grille comportant les mesures du motif de bande latérale supérieure ou du motif de bande latérale inférieure ;

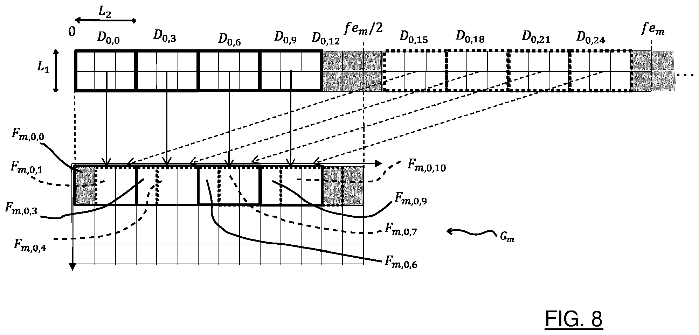

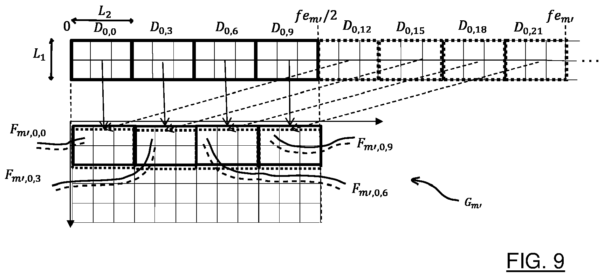

- Les figures 8 et 9 illustrent le repliement de la bande de réception pour deux valeurs différentes de la fréquence d'échantillonnage ;

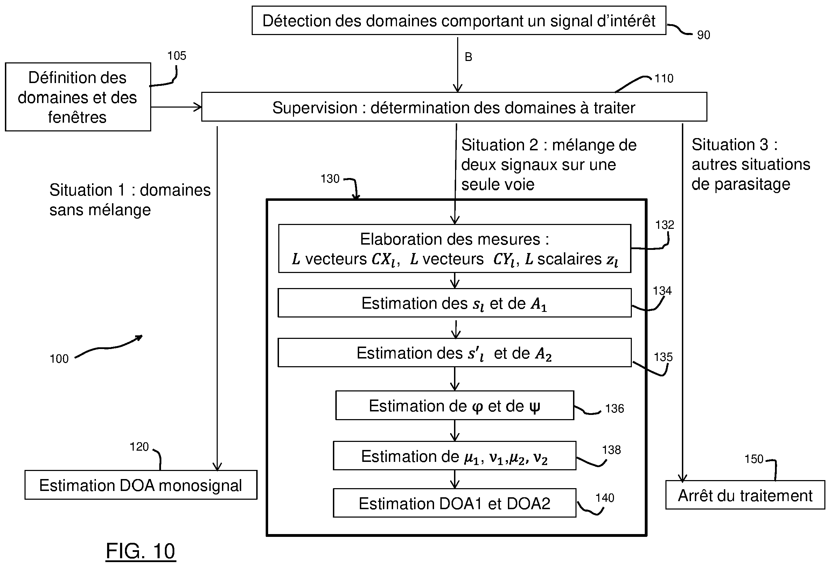

- La figure 10 est une représentation schématique sous forme de blocs d'un mode de réalisation possible du procédé selon l'invention, donnée à titre indicatif et sans caractère restrictif ; et,

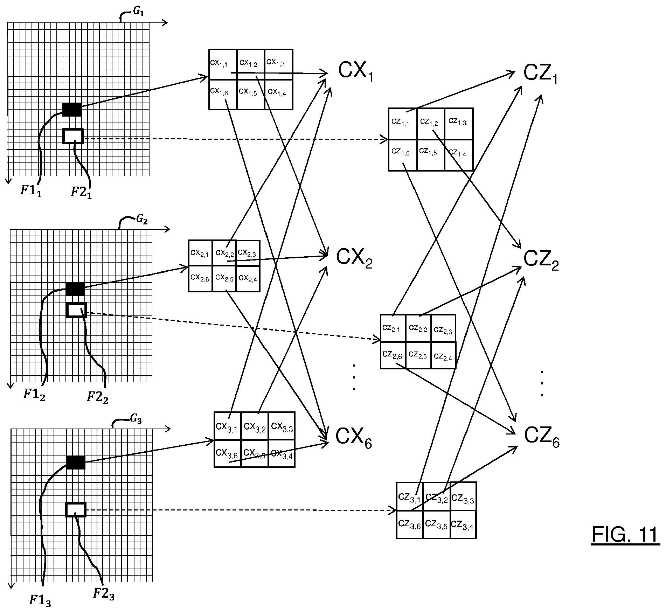

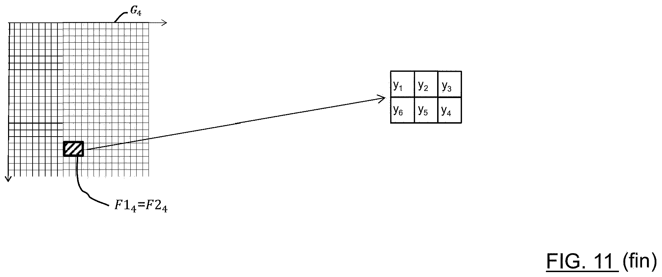

- La figure 11 illustre la manière de traiter les mesures d'une paire de domaines repliés dans une même fenêtre sur une des voies de réception.

En se référant à la figure 5, un interféromètre 10 comprend une pluralité de M antennes, $12_1$, ..., $12_m$, ...$12_M$, où l'indice m de chaque antenne est un nombre entier compris entre 1 et M, avec M entier supérieur ou égal à 4. Les antennes sont identiques entre elles. Il s'agit d'antennes très large bande.

Pour la suite, l'indice m sert également de référence à tous les éléments qui sont rattachés à une même antenne $12_m$ : moyens matériels, mesures, grandeurs diverses, etc.

Chaque antenne est associée à une voie de réception comportant successivement une chaîne de réception analogique, $14_1$, ..., $14_m$, ...$14_M$, et une chaîne de réception numérique $20$,, ..., $20_m$, ... $20_M$.

Chaque chaîne de réception analogique $14_m$, placée immédiatement derrière l'antenne $12_m$, comporte une chaîne d'amplification $15_m$, un module de filtrage analogique $16_m$. Ce dernier sélectionne une bande de réception, [0, $f_{max}$], qui est une très large bande de fréquence, typiquement quelques gigahertz à quelques dizaines de gigahertz.

Chaque chaîne de réception numérique $20_m$ comporte un module de conversion analogique-numérique $22_m$ suivi d'un module de traitement numérique du signal $26_m$.

Le module de conversion analogique-numérique $22_m$ est associé à une fréquence d'échantillonnage $fe_m$. Il est propre à effectuer un échantillonnage des signaux réels délivrés par le module $16_m$ à la fréquence d'échantillonnage $fe_m$.

La fréquence d'échantillonnage $fe_m$ ne respecte pas le critère de Nyquist-Shannon, de telle sorte qu'il y a du repliement spectral. La fréquence d'échantillonnage $fe_m$ reste cependant bien supérieure à l'étalement spectral des signaux d'intérêt. Ainsi le spectre des signaux d'intérêt est préservé, mais il est translaté d'un multiple de la fréquence d'échantillonnage $fe_m$, dans la bande repliée $[-fe_m/2, fe_m/2]$.

Le module de traitement numérique du signal $26_m$ est propre à traiter les signaux réels échantillonnés.

Il effectue des analyses spectrales du signal numérisé délivré en sortie du module $22_m$. Il met par exemple et de préférence en oeuvre des Transformées de Fourier Discrètes - TFD, de préférence pondérées.

L'interféromètre 10 comporte également un calculateur 28, commun aux M voies de réception et qui collecte les mesures obtenues en sortie de chacun des M modules de traitement numérique du signal, $26_1$ à $26_M$.

Le calculateur 28 est un ordinateur comportant des moyens de mémorisation et des moyens de calcul. Les moyens de mémorisation sont propres à stocker les instructions de programmes d'ordinateur. Les moyens de calcul sont propres à exécuter lesdites instructions.

Le calculateur 28 est notamment propre à déterminer la direction d'arrivée de chacun des signaux d'intérêt reçus sur les antennes $12_1$ à $12_M$ par l'exécution d'un programme permettant la mise en oeuvre du procédé selon l'invention.

Les fréquences d'échantillonnage $fe_m$ sont choisies différentes les unes des autres. Dit autrement, une valeur de fréquence d'échantillonnage n'est affectée qu'à un seul module de conversion analogique-numérique $22_m$.

L'interféromètre 10 dispose donc de M valeurs de fréquences d'échantillonnage $fe_m$ afin de lever les ambiguïtés en fréquence lorsqu'on passe des fréquences mesurées dans la première bande de Nyquist des différentes voies de réception, à la fréquence finale déterminée dans la bande de réception.

Comme illustré par les figures 6 et 7, chaque module de traitement numérique du signal $26_m$ effectue une TFD du signal qui lui est présenté par le module $22_m$. Les TFD successivement réalisées dans le temps sont « empilées » afin d'obtenir une représentation temps-fréquence, ou grille temps-fréquence $G_m$.

Chaque TFD réalisée par le module $26_m$ prélève, pendant un intervalle temporel de durée $\Delta T_m$, les signaux échantillonnés avec la fréquence $fe_m$. Chaque TFD prélève par conséquent un nombre d'échantillons $N_m$ :

$$N_m = \Delta T_m . fe_m.$$

Afin d'obtenir la même résolution spectrale $\Delta F$ sur toutes les voies de réception, on impose, pour toutes les valeurs de m :

$$\frac{N_m}{fe_m} = \Delta T_m = \Delta T = \frac{1}{\Delta F}$$

De plus, pour avoir des informations synchrones entre les différentes TFD réalisées par les modules $26_m$, on impose un début et une fin d'acquisition communes aux différentes TFD.

On note que, si toutes les TFD n'ont pas la même résolution spectrale le fonctionnement du procédé selon l'invention est dégradé, mais reste possible.

On note que les intervalles de temps successivement analysés peuvent être contigus ou partiellement recouvrants. Dans un souci de simplicité, on supposera, dans la suite, que les intervalles de temps sont contigus.

En raison de la propriété de symétrie hermitienne du spectre des signaux réels de bande étroite, on conserve dans la grille temps-fréquence $G_m$ uniquement les canaux d'analyse spectrale compris entre 0 et $fe_m/2$, sans que cela constitue une perte de généralité.

Pour un signal réel S occupant, dans la bande de réception, un canal de largeur $\Delta F$, centré sur la fréquence f

= k $\Delta F$ , la partie de son spectre prélevée par l'analyse spectrale dans l'intervalle [0, fe$_m$/2], est soit le motif de la bande latérale supérieure, soit le motif de la bande latérale inférieure :

- si r, le reste de la division entière de k par N$_m$, est compris entre 0 et N$_m$/2, la bande latérale supérieure du signal se replie dans l'intervalle ]0, fe$_m$/2 [, sur la fréquence r$\Delta F$ ; et la bande latérale inférieure du signal se replie dans l'intervalle ]-fe$_m$/2,0[. La partie du spectre prélevée dans ]0, fe$_m$/2[ est donc le motif de la bande latérale supérieure, S$^+$ (cas de la figure 6).

- si r, le reste de la division entière de k par N$_m$ est compris entre N$_m$/2 et N$_m$, alors la bande latérale supérieure du signal se replie dans l'intervalle ]- fe$_m$/2, 0[, et la bande latérale inférieure du signal se replie dans l'intervalle ]0,

fe$_m$/2[, sur la fréquence $\left(\frac{N_m}{2} - r\right)\Delta F$ . La partie du spectre prélevée dans ]0, fe$_m$/2 [ est donc le motif de la bande latérale inférieure S$^-$ (cas de la figure 7).

Le cas d'un signal à cheval sur deux zones de Nyquist différentes n'est pas traité ici.

Par conséquent, pour tout signal réel S, la partie du spectre prélevée par l'analyse spectrale dans l'intervalle [0, fe$_m$/2], est soit le motif de la bande latérale supérieure, notée ici **S$^+$**, soit le motif de la bande latérale inférieure, notée ici **S$^-$**.

La figure 6 montre le prélèvement du spectre **S$^+$** d'un signal réel, tandis que la figure 7 montre le prélèvement du spectre **S$^-$** d'un signal réel.

Chaque case d'une grille G$_m$ contient un scalaire complexe qui est indicé par m indice de la voie (m est aussi l'indice de la fréquence d'échantillonnage associée à cette voie de l'interféromètre) ; par i indice temporel (avec une résolution $\Delta T$) ; et par j indice fréquentiel (avec une résolution $\Delta F$).

Les grilles G$_m$ en sortie des différentes voies sont mises à jour périodiquement et simultanément, au rythme des transformées de Fourier. Les traitements en aval peuvent être effectués dans le flot, au rythme des transformées de Fourier, ou sur des lots (« batchs » en anglais) de plusieurs transformées de Fourier consécutives.

On note que les M grilles sont superposables en temps et en fréquence, mais ne comportent pas le même nombre de cases selon l'axe fréquentiel, la largeur de la première bande de Nyquist étant fonction de la fréquence d'échantillonnage fe$_m$.

La durée d'un intervalle de temps $\Delta T$ est, en général, plus courte que celle des signaux d'intérêt. En conséquence, un signal d'intérêt apparaît sur plusieurs cases temps/fréquence successives temporellement, c'est-à-dire sur plusieurs cases adjacentes selon l'axe temporel.

Un signal d'intérêt apparaît aussi dans plusieurs cases temps/fréquence adjacentes fréquentiellement, car son spectre n'est pas nécessairement centré dans un des canaux de la TFD, sa largeur spectrale pouvant être supérieure à $\Delta F$.

Un signal d'intérêt est ainsi généralement perçu, par les analyses spectrales qui se suivent dans le temps, sur un ensemble de plusieurs cases temps/fréquences adjacentes en temps et en fréquence.

Un signal reçu est donc modélisé et traité sur des domaines temps/fréquence subdivisant l'espace temps/fréquence, chaque domaine correspondant au produit d'un intervalle temporel égal à quelques TFD successives, par un intervalle fréquentiel égal à quelques canaux.

Plus précisément, les domaines temps/fréquence sont définis de manière à découper la bande de réception [0, f$_{max}$], en intervalles fréquentiels, de largeur fréquentielle L$_2$ $\times$ $\Delta F$, où L$_2$ est un entier naturel ; et l'axe temporel, en intervalles temporels, de durée L$_1$ $\times$ $\Delta T$, où L$_1$ est un entier naturel.

Un domaine temps/fréquence est repéré par un indice temporel i et par un indice fréquentiel k, que l'on peut par exemple choisir égaux respectivement au minimum des indices de TFD sur ce domaine, et au minimum des indices des intervalles fréquentiels sur ce domaine. Ainsi, un domaine indicé par i et k correspond au produit cartésien de l'intervalle [i $\Delta T$; (i + L$_1$) L$_1 \Delta T$] $\times$ [k$\Delta F$; (k + L$_2$)$\Delta F$].

Puisque le cas d'un signal à cheval sur deux zones de Nyquist différentes est ici exclu, tout domaine est supposé être un produit cartésien d'un intervalle temporel par un intervalle fréquentiel complètement inclus dans une seule zone de Nyquist (i.e. inclus dans un intervalle de la forme $\left] p\frac{fe_m}{2} ; (p + 1) \frac{fe_m}{2}\right[$ , où p est un entier).

Par conséquent, quelle que soit la voie de réception d'indice m considérée, tout domaine se replie dans une fenêtre temps/fréquence égale au produit cartésien d'un intervalle temporel par un intervalle fréquentiel qui est complètement incluse dans ]0; fe$_m$/2[.

La relation entre domaines et fenêtres est illustrée sur les figures 8 et 9. Sur ces figures, on a représenté les domaines D$_{i,k}$ jusqu'à la deuxième zone de Nyquist. Chaque domaine présente une largeur fréquentielle 3 $\times$ $\Delta F$ (L$_2$ = 3) et une durée 2 $\times$ $\Delta T$ (L$_1$ = 2). Les cases d'indice fréquentiel 12, 13 et 14 de la figure 8, ne font pas partie d'un domaine, car celui-ci serait sinon à cheval entre les première et deuxième zones de Nyquist.

A chaque domaine $D_{i,k}$ correspond, par repliement, une fenêtre $F_{m,i,j}$ de la grille temps-fréquence $G_m$ après échantillonnage à $fe_m$.

Les fenêtres $F_{m,i,j}$ sont indicées par : m, indice de la voie ; i indice temporel ; et j(k, m) indice fréquentiel.

Un ordre de lecture des L cases d'une même fenêtre est choisi arbitrairement et identiquement pour toutes les fenêtres. Par exemple, les cases d'une fenêtre sont d'abord lues selon l'axe des fréquences, puis selon l'axe du temps.

Ainsi, par commodité d'écriture, les indices de temps et de fréquence des cases d'une fenêtre sont remplacés par un indice 1 unique selon l'ordre de lecture, de telle sorte qu'une case temps/fréquence est finalement désignée par deux indices : m indice de l'antenne, et 1 indice temps/fréquence.

Sur ces prémices, un mode de réalisation du procédé 100 selon l'invention va être présenté en référence à la figure 10.

Il est considéré qu'en amont du procédé 100, une fonction de détection robuste au parasitage dû au repliement spectral est mise en oeuvre (étape 90 sur la figure 10). Cette fonction fournit entre autres, pour chaque domaine temps/fréquence, l'information suivante : présence ou absence d'un signal d'intérêt dans le domaine considéré. Cette fonction ne fait pas partie de la présente invention. Un exemple d'une telle fonction est présenté dans la demande de brevet FR n°1 873 938.

La situation où plusieurs signaux sont présents dans le même domaine temps/fréquence (c'est-à-dire la situation de plusieurs signaux mélangés en temps et en fréquence dans la bande de réception) n'est pas traité : la probabilité qu'un tel mélange se produise est beaucoup plus faible que la probabilité des mélanges dus au repliement spectral.

A l'issue de l'étape 90, est mise à jour une liste B des domaines temps/fréquence à l'intérieur desquels se trouve un signal d'intérêt.

Le procédé 100 débute par une étape 105, réalisable en temps réel ou hors ligne, qui permet, pour tout domaine temps/fréquence $D_{i,k}$ de la bande de réception (référencé par son indice temporel i et son indice fréquentiel k) et pour toute voie m d'extraire et de mémoriser l'indice r(k, m), et au cas où le domaine $D_{i,k}$ contiendrait un signal utile, de spectre S, de déterminer si les mesures dans la première zone positive de Nyquist ]0; $fe_m/2$[ correspondent au motif de la bande latérale supérieure de S, $S^+$, ou à celui de la bande latérale inférieure de S, $S^-$.

On a les propriétés suivantes, sachant que r(k, m) est égal au reste de la division euclidienne de k par $N_m$ :

- si $r(k, m) < \dfrac{N_m}{2}$, la fenêtre $F_{m,i,j}$, qui est constituée des $L = L_1 \times L_2$ cases dont les indices fréquentiels sont les entiers de l'intervalle [r(k, m), r(k, m) + $L_2$[ (j est alors égal à r(k, m)), et dont les indices temporels sont les entiers de l'intervalle [i, i + $L_1$[, contient $S^+$ ;

- si $\dfrac{N_m}{2} < r(k, m)$, la fenêtre $F_{m,i,j}$, qui est constituée des $L = L_1 \times L_2$ cases dont les indices fréquentiels sont les entiers de l'intervalle $\left]\dfrac{N_m}{2} - r(k, m) - L_2, \dfrac{N_m}{2} - r(k, m)\right]$ (j est alors égal à $\dfrac{N_m}{2} - r(k, m) - L_2$) et dont les indices temporels sont les entiers de l'intervalle [i, i + $L_1$[, contient $S^-$.

Puis, une étape de supervision 110 examine l'ensemble des domaines de la liste B fournie en sortie de l'étape 90 et les regroupe selon la situation de parasitage compte tenu des informations en sortie de l'étape 105 sur la manière dont les domaines se replient :

- Première situation : absence de parasitage ; le domaine sera traité indépendamment de tous les autres ;
- Deuxième situation : présence d'un parasitage (présence simultanée, dans la liste B, d'un premier domaine et d'un second, tel que le second domaine se replie dans la même fenêtre que le premier domaine, sur une des voies de réception). Les deux domaines ont donc une fenêtre en commun. Les signaux d'intérêt contenus dans les deux domaines se parasitent mutuellement. On supposera, ce qui n'est pas limitatif, que la voie sur laquelle se produit le mélange est la voie d'indice M. Un réordonnancement des indices permet si nécessaire de se ramener à cette situation ;
- Troisième situation : présence d'un parasitage multiple (par exemple, présence simultanée, dans la liste B, de plus de deux domaines ayant une fenêtre en commun avec le premier domaine).

Pour tout domaine relevant de la troisième situation, dans le mode de réalisation actuellement préféré, le procédé 100 passe à l'étape 150 où il est abandonné.

Pour tout domaine relevant de la première situation, le procédé 100 passe à l'étape 120. Dans cette étape, la direction d'arrivée - DOA du signal est estimée par une méthode conventionnelle, telle que l'interférométrie ou la corrélation vectorielle, directement à partir des mesures prélevées dans la fenêtre associée au domaine considéré lorsque cette fenêtre contient $S^+$, ou à partir des conjugués de ces mesures lorsque cette fenêtre contient $S^-$.

En effet, dans cette situation monosource, les déphasages interférométriques (les différences de phases dues au retard de propagation d'une antenne à l'autre) peuvent être estimées par les mesures des différences de phase (encore appelées phases différentielles) entre les mesures prélevées sur les différentes voies en prenant comme référence une voie choisie arbitrairement, ce qui permet ensuite d'estimer l'angle d'arrivée du signal.

Pour tout domaines relevant de la deuxième situation, le procédé 100 réalise un traitement particulier 130.

La situation correspond à celle où un premier signal d'intérêt $S_1$, émis par une source $SO_1$ et présent dans un premier domaine, est parasité par exactement un unique autre signal d'intérêt, ou second signal $S_2$, émis par une source $SO_2$ et présent dans un second domaine. De plus, ce second signal n'a pas d'autre parasite que le premier signal,

Le traitement 130 est fondé sur l'exploitation conjointe des fenêtres associées au premier domaine du premier signal, $S_1$, et des fenêtres associées au second domaine du second signal $S_2$, dans le but d'extraire les déphasages interférométriques simultanément pour les premier et second signaux.

Dans ce qui suit, le motif de la bande latérale supérieure (respectivement inférieure) du premier signal est appelé $S_1^+$ (respectivement $S_1^-$) ; et le motif de la bande latérale supérieure (respectivement inférieure) du second signal est appelé $S_2^+$ (respectivement $S_2^-$).

Dans ce qui suit, les fenêtres sont simplement désignées par $F1_m$ et $F2_m$, pour les premier et second signaux respectivement en omettant les indices i, j($k_1$, m), j($k_2$, m) (avec i l'indice temporel commun aux premier et second domaines, $k_1$ l'indice fréquentiel du premier domaine, et $k_2$ l'indice fréquentiel du second domaine).

A l'étape 132, des vecteurs de mesures sont élaborés à partir des mesures des cases des fenêtres associées aux premier et second domaines. La figure 11 illustre cette étape, pour le cas où le nombre M de voies est égal à 4.

Plus précisément, pour le premier signal, $S_1$, les mesures prélevées sur les M fenêtres $F1_m$ se répartissent en :

- Mesures sans mélange sur M - 1 fenêtres (sur la figure 11, il s'agit des fenêtres $F1_1$, $F1_2$ et $F1_3$) ;
- Mesures mélangées avec le second signal, $S_2$, sur la fenêtre restante ($F1_4$ sur la figure 11).

Pour le second signal, $S_2$, les mesures prélevées sur les M fenêtres se répartissent en :

- Mesures sans mélange sur M - 1 fenêtres ($F2_1$, $F2_2$ et $F2_3$ sur la figure 11) ;
- Mesures mélangées avec le premier signal, $S_1$, sur la fenêtre restante ($F2_4$ sur la figure 11, qui coïncide avec la fenêtre $F1_4$).

Les mesures non mélangées du premier signal $S_1$ sont alors mises sous la forme de L vecteurs $CX_l$ de dimension M - 1.

$$CX_l = \begin{pmatrix} cx_{l,1} \\ \vdots \\ cx_{l,M-1} \end{pmatrix}$$

Les composantes $cx_{l,m}$ sont définies comme suit :

- Si la fenêtre $F1_m$ contient $S_1^- : cx_{l,m} = \bar{x}_{l,m}$ où $x_{l,m}$ est le scalaire complexe contenu dans la case 1 de la fenêtre $F1_m$.
- Sinon, $F1_m$ contient $S_1^+ : cx_{l,m} = x_{l,m}$

De même, les mesures non mélangées du second signal $S_2$ sont mises sous la forme de L vecteurs $CZ_l$ de dimension M - 1.

$$CZ_l = \begin{pmatrix} cz_{l,1} \\ \vdots \\ cz_{l,M-1} \end{pmatrix}$$

- Si la fenêtre $F2_m$ contient $S_2^-$, $cz_{l,m} = z_{l,m}$ où $z_{l,m}$ est le scalaire complexe contenu dans la case 1 de la fenêtre $F2_m$.
- Sinon, $F2_m$ contient $S_2^+ : cz_{l,m} = z_{l,m}$

Par ailleurs, les mesures prélevées sur la fenêtre de la voie où se produit le mélange (fenêtre $F1_4 = F2_4$ sur la figure 11) correspondent à L scalaires complexes $y_l$, avec l compris entre 1 et L (sur la figure 11, cela conduit aux six scalaire complexes $y_1$, $y_2$, ... $y_6$).

Le procédé 100 passe alors à l'étape 134 d'estimation des paramètres des premier et second signaux sur les voies où il n'y a pas de mélange. Cette estimation est fondée sur les équations suivantes :

$$\begin{cases} CX_l = s_l U_1 + W_{1l} \\ CZ_l = s'_l U_2 + W_{3l} \end{cases}, l \in [1, L]$$

où : $s_l$ et $s'_l$ sont les amplitudes complexes du premier signal et du second signal respectivement, ces amplitudes intégrant l'information sur la phase propre du premier signal et du second signal respectivement ; $U_1$ et $U_2$ sont les vecteurs directionnels (« steering vectors » en anglais), réduits aux voies non affectées par le mélange, ces vecteurs directionnels intégrant l'information sur la phase interférométrique du premier signal et du second signal respectivement (c'est-à-dire in fine l'information permettant de remonter à la direction de la source par rapport aux antennes) ; et $W_{1l}$, $W_{3l}$ sont des bruits gaussiens, centrés, indépendants en l et entre eux.

De manière connues en soi, les vecteurs directionnels $U_1$ et $U_2$ intègrent l'information sur la phase interférométrique du premier signal et du second signal respectivement (c'est-à-dire in fine une information permettant de remonter à la direction de la source par rapport aux antennes).

$U_1$ et $U_2$ n'étant pas normés, les vecteurs $A_1$ et $A_2$ normés et les réels positifs $\mu_1$ et $\mu_2$ sont introduits, tels que : $U_1 = \mu_1 A_1$ , $U_2 = \mu_2 A_2$ .

Pour résoudre ces équations, on considère d'abord uniquement les vecteurs $X_l$, c'est-à-dire les mesures sans mélange du premier signal $S_1$, de manière indépendante des autres mesures.

La matrice $Cov_1$, matrice de covariance des mesures sans mélange pour le premier signal, est alors calculée à partir des L vecteurs de mesures $X_l$ 1 e [1, L] :

$$Cov_1 = \sum_{l=1}^{L} (CX_l)(CX_l^*)$$

où l'opérateur * dénote l'opérateur transposé conjugué.

La matrice $Cov_1$ est ensuite diagonalisée afin d'obtenir l'estimée $\hat{A}_1$ du vecteur $A_1$, qui est le vecteur propre associé à la plus grande valeur propre de la matrice $Cov_1$.

Les phases du vecteur directionnel du premier signal $S_1$ sur les voies sans mélange sont obtenues en calculant l'argument de chaque composante de $\hat{A}_1$.

Les amplitudes complexes $s_l$ du premier signal, filtrées sur les M - 1 voies de mesure où il est observé seul, sont alors calculables à un facteur réel positif près, $\mu_1$. Pour cela les grandeurs $\xi_l$ sont alors déterminées à partir du produit scalaire hermitien des vecteurs $\hat{A}_1$ et $CX_l$ :

$$\xi_l = \hat{A}_1^* CX_l (= \widehat{\mu_1 s_l})$$

De manière similaire, on considère ensuite uniquement les vecteurs $Z_l$, c'est-à-dire les mesures sans mélange du second signal $S_2$, de manière indépendante des autres mesures.

La matrice $Cov_2$, matrice de covariance des mesures sans mélange pour le second signal, est calculée à partir des L vecteurs de mesures $Z_l$, 1 e [1, L] :

$$Cov_2 = \sum_{l=1}^{L} (CZ_l)(CZ_l^*)$$

Cette matrice $Cov_2$ est diagonalisée de manière à obtenir l'estimée $\hat{A}_2$ du vecteur $A_2$, qui est le vecteur propre associé à la plus grande valeur propre de la matrice $Cov_2$.

Les phases du vecteur directionnel du second signal $S_2$ sur les voies sans mélange sont estimées en calculant l'argument de chaque composante de $\hat{A}_2$.

Les amplitudes complexes s'$_l$ du second signal, filtrées sur les M - 1 voies de mesure où il est observé seul, sont calculées à un facteur réel positif près, $\mu_2$.

Pour cela, on détermine les grandeurs $\eta_l$ à partir du produit scalaire hermitien des vecteurs $\hat{A}_2$ et $CZ_l$ :

$$\eta_l = \widehat{A}_2^* CZ_l (= \widehat{\mu_2 s'_l})$$

Le procédé 100 passe ensuite à l'étape 136 consistant à considérer maintenant également la voie sur laquelle il y a mélange pour estimer les phases interférométriques $\varphi$ et $\psi$ des premier et second signaux dans la voie où se produit le mélange. Cette étape utilise les grandeurs $\xi_l$ et $\eta_l$ obtenues à l'étape 134 et les L scalaires complexes $y_l$ de la voie M où se produit le mélange. Cette estimation est fondée sur les équations suivantes modélisant les quatre cas possibles :

- Cas 1 : sur la voie de mélange, c'est-à-dire la voie d'indice M, les motifs prélevés sont $\mathbf{S_1^-}$ et $\mathbf{S_2^-}$. Les L mesures $y_l$ prélevées sur la voie de mélange vérifient l'équation complexe :

$$y_l = v_1 e^{-i\varphi} \bar{s}_l + v_2 e^{-i\psi} \overline{s'_l} + w_{2l}$$

Où ( $\bar{\ }$ ) est l'opérateur « conjugué de ».

- Cas 2 : sur la voie de mélange, les motifs prélevés sont $\mathbf{S_1^-}$ et $\mathbf{S_2^+}$. Les L mesures $y_l$ prélevées sur la voie de mélange vérifient alors l'équation complexe :

$$y_l = v_1 e^{-i\varphi} \bar{s}_l + v_2 e^{i\psi} \overline{s'_l} + w_{2l}$$

- Cas 3 : sur la voie de mélange, les motifs prélevés sont $\mathbf{S_1^+}$ et $\mathbf{S_2^-}$. Les L mesures $y_l$ prélevées sur la voie de mélange vérifient alors l'équation complexe :

$$y_l = v_1 e^{i\varphi} s_l + v_2 e^{-i\psi} \bar{s}'_l + w_{2l}$$

- Cas 4 : sur la voie de mélange, les motifs prélevés sont $\mathbf{S_1^+}$ et $\mathbf{S_2^+}$. Les L mesures $y_l$ prélevées sur la voie de mélange vérifient alors l'équation complexe :

$$y_l = v_1 e^{i\varphi} s_l + v_2 e^{i\psi} s'_l + w_{2l}$$

Où $v_1 e^{i\varphi}$ (respectivement $v_2 e^{i\psi}$) est la composante du vecteur directionnel du premier signal (respectivement du second signal) sur la voie de mélange : $v_1$ (respectivement $v_2$) est un réel positif représentant le module du vecteur directionnel sur la voie de mélange du premier signal (respectivement du second signal) ; $\varphi$ (respectivement $\psi$) est la phase du vecteur directionnel du premier signal (respectivement du second signal) sur la voie de mélange ; et où $w_{2l}$ est le bruit sur la voie de mélange, indépendant en l, considéré blanc, gaussien, de variance connue $2\sigma^2$.

Avec ces notations, les vecteurs directionnels normés $V_1$ et $V_2$ des premier et second signaux $S_1$ et $S_2$, valent respectivement :

- Dans le cas 1 : $V_1 = \begin{pmatrix} U_1 \\ v_1 e^{-i\varphi} \end{pmatrix}$ et $V_2 = \begin{pmatrix} U_2 \\ v_2 e^{-i\psi} \end{pmatrix}$,

- Dans le cas 2 : $V_1 = \begin{pmatrix} U_1 \\ v_1 e^{-i\varphi} \end{pmatrix}$ et $V_2 = \begin{pmatrix} U_2 \\ v_2 e^{i\psi} \end{pmatrix}$

- Dans le cas 3 : $V_1 = \begin{pmatrix} U_1 \\ v_1 e^{i\varphi} \end{pmatrix}$ et $V_2 = \begin{pmatrix} U_2 \\ v_2 e^{-i\psi} \end{pmatrix}$,

- Dans le cas 4 :
$$V_1 = \begin{pmatrix} U_1 \\ v_1 e^{i\varphi} \end{pmatrix} \text{ et } V_2 = \begin{pmatrix} U_2 \\ v_2 e^{i\psi} \end{pmatrix},$$

On réécrit ces équations sous la forme :

$$y_l = z_1 \xi_l + z_2 \eta_l + w_{2l}$$

Où les inconnues sont :

- Dans le cas 1 :
$$z_1 = \frac{v_1 e^{-i\varphi}}{\mu_1} \text{ et } z_2 = \frac{v_2 e^{-i\psi}}{\mu_2},$$

- Dans le cas 2 :
$$z_1 = \frac{v_1 e^{-i\varphi}}{\mu_1} \text{ et } z_2 = \frac{v_2 e^{+i\psi}}{\mu_2},$$

- Dans le cas 3 :
$$z_1 = \frac{v_1 e^{+i\varphi}}{\mu_1} \text{ et } z_2 = \frac{v_2 e^{-i\psi}}{\mu_2},$$

- Dans le cas 4 :
$$z_1 = \frac{v_1 e^{+i\varphi}}{\mu_1} \text{ et } z_2 = \frac{v_2 e^{+i\psi}}{\mu_2}.$$

L'estimation consiste alors à rechercher le couple $z_1$, $z_2$ qui minimise

$$|y_l - z_1 \xi_l - z_2 \eta_l|^2$$

Les estimées de $z_1$ et $z_2$ sont alors données par les relations suivantes :

$$\hat{z}_1 = \frac{P_\eta\left(\sum_l \bar{\xi}_l y_l\right) - P_{\xi\eta}\left(\sum_l \bar{\eta}_l y_l\right)}{P_\xi P_\eta - |P_{\xi\eta}|^2}$$

$$\hat{z}_2 = \frac{P_\xi\left(\sum_l \bar{\eta}_l y_l\right) - \overline{P}_{\xi\eta}\left(\sum_l \bar{\xi}_l y_l\right)}{P_\xi P_\eta - |P_{\xi\eta}|^2}$$

Où : $P_\xi = \sum_l |\xi_l|^2$ ; $P_\eta = \sum_l |\eta_l|^2$ ; $P_{\xi\eta} = \sum_l \bar{\xi}_l \eta_l$, où le calcul des $\xi_l$ et $\eta_l$ résulte de l'étape 134.

L'étape 136 se termine par le calcul de l'estimation de la phase du vecteur directionnel normé $\hat{V}_1$ sur la voie de mélange, $\hat{\varphi}$, et de l'estimation de la phase du vecteur directionnel normé $V_2$ sur la voie de mélange, $\hat{\psi}$ :

- Cas 1 : $\hat{\varphi} = -\arg(\hat{z}_1)$, et $\hat{\psi} = -\arg(\hat{z}_2)$,
- Cas 2 : $\hat{\varphi} = -\arg(\hat{z}_1)$, et $\hat{\psi} = \arg(\hat{z}_2)$,
- Cas 3 : $\hat{\varphi} = \arg(\hat{z}_1)$, et $\hat{\psi} = -\arg(\hat{z}_2)$,
- Cas 4 : $\hat{\varphi} = \arg(\hat{z}_1)$, et $\hat{\psi} = \arg(\hat{z}_2)$.

A l'issue de l'étape, quel que soit le cas de figure, les contributions des deux signaux sont séparées, et les estimées des phases de toutes les composantes de $V_1$ (respectivement $V_2$), appelées phases interférométriques, sont disponibles. Il est donc possible de passer directement à une étape 140 de calcul de la direction d'arrivée du premier signal (respectivement du second signal), par toute méthode connue de goniométrie de phase.

Avantageusement, le procédé 100 comporte une étape supplémentaire 138, permettant, après avoir calculé $\hat{\varphi}$ et $\hat{\psi}$, de calculer les estimations suivantes:

$$\hat{\mu}_1 = \frac{1}{\sqrt{1+|\hat{z}_1^2|}}, \; \hat{v}_1 = \frac{|\hat{z}_1|}{\sqrt{1+|\hat{z}_1^2|}}, \; \hat{\mu}_2 = \frac{1}{\sqrt{1+|\hat{z}_2^2|}} \; \text{et} \; \hat{v}_2 = \frac{|\hat{z}_2|}{\sqrt{1+|\hat{z}_2^2|}}$$

Ce qui permet d'obtenir les estimations des vecteurs directionnels normés du premier signal S$_1$ et du second signal S$_2$:

- Dans le cas 1 :
$$\widehat{V}_1 = \begin{pmatrix} \hat{\mu}_1 \widehat{A}_1 \\ \hat{v}_1 e^{-i\hat{\varphi}} \end{pmatrix}, \; \widehat{V}_2 = \begin{pmatrix} \hat{\mu}_2 \widehat{A}_2 \\ \hat{v}_2 e^{-i\hat{\psi}} \end{pmatrix}$$

- Dans le cas 2 :
$$\widehat{V}_1 = \begin{pmatrix} \hat{\mu}_1 \widehat{A}_1 \\ \hat{v}_1 e^{-i\hat{\varphi}} \end{pmatrix}, \; \widehat{V}_2 = \begin{pmatrix} \hat{\mu}_2 \widehat{A}_2 \\ \hat{v}_2 e^{i\hat{\psi}} \end{pmatrix}$$

- Dans le cas 3 :
$$\widehat{V}_1 = \begin{pmatrix} \hat{\mu}_1 \widehat{A}_1 \\ \hat{v}_1 e^{i\hat{\varphi}} \end{pmatrix}, \; \widehat{V}_2 = \begin{pmatrix} \hat{\mu}_2 \widehat{A}_2 \\ \hat{v}_2 e^{-i\hat{\psi}} \end{pmatrix}$$

- Dans le cas 4 :
$$\widehat{V}_1 = \begin{pmatrix} \hat{\mu}_1 \widehat{A}_1 \\ \hat{v}_1 e^{i\hat{\varphi}} \end{pmatrix}, \; \widehat{V}_2 = \begin{pmatrix} \hat{\mu}_2 \widehat{A}_2 \\ \hat{v}_2 e^{i\hat{\psi}} \end{pmatrix}$$

Le procédé 100 passe alors à l'étape 140 de calcul de la direction d'arrivée du premier signal et de la direction d'arrivée du second signal par goniométrie d'amplitude et de phase.

Dans la présente description a été traité en détail le cas où il a parasitage sur une unique voie de réception entre des premier et second signaux. L'homme du métier saura dériver les équations permettant de traiter d'autres cas, plus complexes, par exemple lorsqu'il y a parasitage sur une première voie de réception entre des premier et second signaux et parasitage sur une seconde voie de réception entre des premier et troisième signaux.

L'homme du métier constatera qu'avec un récepteur mettant en oeuvre le procédé précédent il est possible d'améliorer l'estimation de la direction d'arrivée d'un signal intercepté en présence de parasitage dû au repliement spectral en considérant, en plus des mesures sur les voies où ce signal n'est pas parasité les mesures sur la ou les voies où il est parasité.

L'invention utilise la connaissance approchée (à la résolution des transformées de Fourier près) de la fréquence porteuse de chaque signal, obtenue par une étape de détection préalable.

L'invention permet de séparer, dans la phase mesurée, la contribution de la phase propre du signal et la contribution de la phase interférométrique, et ceci grâce au prélèvement de plusieurs mesures sur chaque voie de réception.

L'invention tire également profit du fait que le mélange ne se produit que sur une voie de réception. En conséquence, les mesures sur les autres voies de réception ne sont pas mélangées, ce qui autorise un traitement partiel du type mono-source. Cette remarque permet de proposer une modélisation simple conduisant à une solution approchée avec une quantité de calculs raisonnable. Ceci est adapté aux applications temps réel et aux applications embarquées.

Avantageusement, le procédé selon l'invention sépare et estime conjointement les signaux qui se mélangent et leur direction d'arrivée.

## Revendications

1. Procédé (100) de séparation et d'estimation des directions d'arrivée de signaux électromagnétiques mis en oeuvre par un goniomètre interférométrique à large bande de réception et à réception numérique sous-échantillonnée,

ledit goniomètre interférométrique comportant M voies de réception, M étant un entier supérieur ou égal à 4, chaque voie de réception comportant successivement une antenne (12$_m$), un module de réception analogique (14$_m$) et un module de réception numérique (20$_m$), le module de réception numérique fonctionnant à une fréquence d'échantillonnage (fe$_m$) qui lui est propre et délivrant périodiquement une grille temps-fréquence (G$_m$) par analyses spectrales successives, chaque case de la grille temps/fréquence contenant une mesure complexe, **caractérisé en ce que**, dans une situation de parasitage d'un premier signal réel (S$_1$) par un second signal (S$_2$), le premier signal et le second signal ayant des fréquences porteuses dont la différence ou la somme est proche d'un multiple de la fréquence d'échantillonnage d'une voie parmi les voies de réception, dite voie de mélange, les autres voies parmi les voies de réception étant dites voies sans mélange, le procédé comporte les étapes consistant à :

- définir (105) des domaines temps/fréquence ($D_{i,k}$) dans l'espace temps/fréquence, chaque domaine correspondant au produit cartésien d'un intervalle temporel égal à la durée de quelques analyses spectrales successives, par un intervalle fréquentiel égal à quelques canaux de l'analyse spectrale, chaque domaine étant replié sur une fenêtre ($F_{m,i,j}$) d'une bande repliée associée à la voie de réception m, chaque fenêtre comportant $L$ cases, le domaine du premier signal étant dit premier domaine, et le domaine du second signal étant dit second domaine ;

- prélever (132), dans les M grilles temps/fréquence délivrées à un instant courant par chacune des voies de réception, les mesures des cases des fenêtres (F1m) associées au premier domaine et les mesures des cases des fenêtres (F2m) associées au second domaine et élaborer des vecteurs de mesure à partir des mesures prélevées de telle sorte que : les mesures du premier signal (S1) sur les voies sans mélange soient mises sous la forme de $L$ premiers vecteurs de mesures ($CX_l$) ; les mesures du second signal (S2) sur les voies sans mélange soient mises sous la forme de $L$ seconds vecteurs de mesures ($CZ_l$) ;

et les mesures sur la voie de mélange correspondent à $L$ scalaires ($y_l$) ;

- estimer (134) les amplitudes complexes, à un coefficient de normalisation près, du premier signal, et le vecteur directionnel réduit aux voies sans mélange et normalisé du premier signal, uniquement à partir des $L$ premiers vecteurs de mesure ($CX_l$) ;

- estimer (135) les amplitudes complexes, à un coefficient de normalisation près, du second signal, et le vecteur directionnel réduit aux voies sans mélange et normalisé du second signal, uniquement à partir des $L$ seconds vecteurs de mesure ($CZ_l$) ;

- calculer (136) les phases interférométriques des premier et second signaux sur la voie de mélange à partir des amplitudes complexes estimées pour les premier et second signaux et à partir des mesures sur la voie de mélange, en considérant que les mesures sur la voie de mélange correspondent à la superposition : soit dans un premier cas du motif de la bande latérale inférieure ($S_1^-$) du premier signal et du motif de la bande latérale inférieure ($S_2^-$) du second signal; soit dans un deuxième cas du motif de la bande latérale inférieure ($S_1^-$) du premier signal et du motif de la bande latérale supérieure ($S_2^+$) du second signal ; soit dans un troisième cas du motif de la bande latérale supérieure ($S_1^+$) du premier signal et du motif de la bande latérale inférieure ($S_2^-$) du second signal ; soit dans un quatrième cas du motif de la bande latérale supérieure ($S_1^+$) du premier signal et du motif de la bande latérale supérieure ($S_2^+$) du second signal, et calculer le module du vecteur directionnel réduit aux voies sans mélange, et l'amplitude de la composante du vecteur directionnel sur la voie de mélange, pour le premier et le second signal respectivement ; et,

- déterminer (140) la direction d'arrivée des premiers et seconds signaux respectivement à partir des phases interférométriques ou à partir des vecteurs directionnels estimés pour les premier et second signaux.

2. Procédé selon la revendication 1, dans lequel :

- si les mesures sur une voie sans mélange correspondent au motif de la bande latérale inférieure du premier signal, respectivement du second signal, les vecteurs de mesure élaborés à partir desdites mesures contiennent les complexes conjugués desdites mesures ; et,

- si les mesures sur une voie sans mélange correspondent au motif de la bande latérale supérieure du premier signal, respectivement du second signal, les vecteurs de mesure élaborés à partir desdites mesures contiennent lesdites mesures.

3. Procédé selon la revendication 2, dans lequel les étapes d'estimation des premier et second signaux sur les M - 1 voies sans mélange sont fondées sur les équations suivantes :

$$\begin{cases} CX_l = s_l U_1 + W_{1l} \\ CZ_l = s_l' U_2 + W_{3l} \end{cases}, l \in [1, L]$$

où : $CX_l$ sont les premiers vecteurs de mesures ; $CZ_l$ sont les seconds vecteurs de mesures ; $s_l$ et $s'_l$ sont les amplitudes complexes du premier signal et du second signal respectivement ; $U_1$ et $U_2$ sont les vecteurs directionnels réduits aux voies sans mélange ; et $W_{1l}$, $W_{3l}$ sont des bruits gaussiens, centrés, indépendants en 1 et entre eux.

4. Procédé selon la revendication 3, dans lequel, $U_1$ et $U_2$ n'étant pas normés, des vecteurs $A_1$ et $A_2$ normés et les réels positifs $\mu_1$ et $\mu_2$ sont introduits, tels que $U_1 = \mu_1 A_1$ , $U_2 = \mu_2 A_2$, et les étapes d'estimation consistent à :

- diagonaliser la matrice $Cov_1$ définie comme :

$$Cov_1 = \sum_{l=1}^{L}(CX_l)(CX_l^*) \ ;$$

- déterminer le vecteur propre associée à la plus grande valeur propre de la matrice $Cov_1$ en tant qu'estimée $\hat{A}_1$ du vecteur $A_1$ ;
- déterminer les amplitudes complexes $s_l$ du premier signal, filtrées sur les M - 1 voies sans mélange, à un facteur réel positif près, $\mu_1$, en calculant les grandeurs $\xi_l$ à partir du produit scalaire hermitien des vecteurs $\hat{A}_1$ et $CX_l$, selon la relation :

$$\xi_l = \hat{A}_1^* CX_l (= \widehat{\mu_1 s_l}) \ ;$$

- diagonaliser la matrice $Cov_2$ définie comme :

$$Cov_2 = \sum_{l=1}^{L}(CZ_l)(CZ_l^*) \ ;$$

- déterminer le vecteur propre associée à la plus grande valeur propre de la matrice $Cov_2$ en tant qu'estimée $\hat{A}_2$ du vecteur $A_2$ ;
- déterminer les amplitudes complexes $s'_l$ du second signal, filtrées sur les M - 1 voies sans mélange, à un facteur réel positif près, $\mu_2$, en calculant les grandeurs $\eta_l$ à partir du produit scalaire hermitien des vecteurs $\hat{A}_2$ et $CZ_l$, selon la relation :

$$\eta_l = \hat{A}_2^* CZ_l (= \widehat{\mu_2 s'_l}).$$

5. Procédé selon la revendication 4, dans lequel calculer (136) les phases interférométriques $\varphi$ et $\psi$ sur la voie de mélange, respectivement du premier signal et du second signal, consiste à estimer le couple de grandeurs $z_1$, $z_2$ , qui sont définies par :

dans le premier cas : $z_1 = \dfrac{v_1 e^{-i\varphi}}{\mu_1}$ et $z_2 = \dfrac{v_2 e^{-i\psi}}{\mu_2}$,

dans le deuxième cas : $z_1 = \dfrac{v_1 e^{-i\varphi}}{\mu_1}$ et $z_2 = \dfrac{v_2 e^{+i\psi}}{\mu_2}$ ,

dans le troisième cas : $z_1 = \dfrac{v_1 e^{+i\varphi}}{\mu_1}$ et $z_2 = \dfrac{v_2 e^{-i\psi}}{\mu_2}$ ,

dans le quatrième cas : $z_1 = \dfrac{v_1 e^{+i\varphi}}{\mu_1}$ et $z_2 = \dfrac{v_2 e^{+i\psi}}{\mu_2}$ ,

où $v_1$ et $v_2$ sont l'amplitude de la composante du vecteur directionnel sur la voie de mélange, respectivement du premier signal et du second signal,
en recherchant le couple $\hat{z}_1$, $\hat{z}_2$ qui minimise l'erreur quadratique : $|y_l - z_1 \xi_l - z_2 \eta_l|^2$, où les $y_l$ sont les mesures sur la voie de mélange.

6. Procédé selon la revendication 5, dans lequel, après l'étape (136) d'estimation des phases interférométriques des premier et second signal, le procédé comporte en outre une étape (138) consistant à estimer, l'amplitude $\mu_1$, respectivement l'amplitude $\mu_2$, du vecteur directionnel du premier signal, respectivement du deuxième signa, réduit aux voies sans mélange, et l'amplitude $v_1$, respectivement l'amplitude $v_2$, de la composante du vecteur directionnel du premier signal, respectivement du deuxième signal, sur la voie de mélange :

$$\hat{\mu}_1 = \frac{1}{\sqrt{1+|\hat{z}_1^2|}}, \hat{v}_1 = \frac{|\hat{z}_1|}{\sqrt{1+|\hat{z}_1^2|}}, \hat{\mu}_2 = \frac{1}{\sqrt{1+|\hat{z}_2^2|}} \quad \text{et} \quad \hat{v}_2 = \frac{|\hat{z}_2|}{\sqrt{1+|\hat{z}_2^2|}},$$

7. Procédé selon la revendication 6, consistant à calculer les estimations des vecteurs directionnels normés selon les relations :

dans le premier cas :
$$\widehat{V}_1 = \begin{pmatrix} \hat{\mu}_1 \widehat{A}_1 \\ \hat{v}_1 e^{-i\hat{\varphi}} \end{pmatrix}, \widehat{V}_2 = \begin{pmatrix} \hat{\mu}_2 \widehat{A}_2 \\ \hat{v}_2 e^{-i\hat{\psi}} \end{pmatrix},$$

dans le deuxième cas :
$$\widehat{V}_1 = \begin{pmatrix} \hat{\mu}_1 \widehat{A}_1 \\ \hat{v}_1 e^{-i\hat{\varphi}} \end{pmatrix}, \widehat{V}_2 = \begin{pmatrix} \hat{\mu}_2 \widehat{A}_2 \\ \hat{v}_2 e^{i\hat{\psi}} \end{pmatrix},$$

dans le troisième cas :
$$\widehat{V}_1 = \begin{pmatrix} \hat{\mu}_1 \widehat{A}_1 \\ \hat{v}_1 e^{i\hat{\varphi}} \end{pmatrix}, \widehat{V}_2 = \begin{pmatrix} \hat{\mu}_2 \widehat{A}_2 \\ \hat{v}_2 e^{-i\hat{\psi}} \end{pmatrix},$$

dans le quatrième cas :
$$\widehat{V}_1 = \begin{pmatrix} \hat{\mu}_1 \widehat{A}_1 \\ \hat{v}_1 e^{i\hat{\varphi}} \end{pmatrix}, \widehat{V}_2 = \begin{pmatrix} \hat{\mu}_2 \widehat{A}_2 \\ \hat{v}_2 e^{i\hat{\psi}} \end{pmatrix}.$$

8. Produit programme d'ordinateur, comportant des instructions propres lorsqu'elles sont exécutées par un ordinateur à mettre en oeuvre un procédé, **caractérisé en ce que** ledit procédé est un procédé conforme à l'une quelconque des revendications 1 à 7.

9. Goniomètre interférométrique (10), ledit goniomètre comportant M voies de réception, M étant un entier supérieur ou égal à 4, chaque voie de réception comportant successivement une antenne ($12_m$), un module de réception analogique ($14_m$) et un module de réception numérique ($20_m$), le module de réception numérique fonctionnant à une fréquence d'échantillonnage ($fe_m$) qui lui est propre et délivrant périodiquement une grille temps-fréquence ($G_m$), chaque case de la grille temps/fréquence contenant une mesure complexe, l'espace temps/fréquence étant subdivisé en domaines ($D_{i,k}$), un domaine étant replié sur une fenêtre ($F_{m,i,j}$) d'une bande repliée associée à la voie de réception m, une fenêtre comportant L cases, **caractérisé en ce qu'**il est adapté pour exécuter les instructions d'un produit programme d'ordinateur conforme à la revendication 8.

**Patentansprüche**

1. Verfahren (100) zur Trennen und Schätzen der Ankunftsrichtungen von elektromagnetischen Signalen, die von einem interferometrischen Goniometer mit breitem Empfangsband und unterabgetastetem digitalem Empfang implementiert werden,

wobei das interferometrische Goniometer M Empfangskanäle umfasst, wobei M eine ganze Zahl größer als oder gleich wie 4 ist, wobei jeder Empfangskanal nacheinander eine Antenne ($12_m$), ein analoges Empfangsmodul ($14_m$) und ein digitales Empfangsmodul ($20_m$) umfasst, wobei das digitale Empfangsmodul mit einer ihm eigenen Abtastfrequenz ($fe_m$) arbeitet und periodisch ein Zeit-Frequenz-Gitter ($G_m$) durch aufeinanderfolgende Spektralanalysen liefert, wobei jedes Feld des Zeit-Frequenz-Gitters eine komplexe Messung enthält, **dadurch gekennzeichnet, dass** in einer Störungssituation eines ersten realen Signals ($S_1$) durch ein zweites Signal ($S_2$), wobei das erste Signal und das zweite Signal Trägerfrequenzen aufweisen, deren Differenz oder Summe nahe bei einem Vielfachen der Abtastfrequenz eines Kanals unter den Empfangskanälen liegt, der Mischkanal genannt wird, wobei die anderen Kanäle unter den Empfangskanälen ungemischte Kanäle genannt werden, das Verfahren die Schritte umfasst, die aus Folgendem bestehen:

- Definieren (105) von Zeit/Frequenz-Domänen ($D_{i,k}$) im Zeit/Frequenz-Raum, wobei jede Domäne dem kartesischen Produkt eines Zeitintervalls, das gleich wie die Dauer einiger aufeinanderfolgender Spektralanalysen ist, mit einem Frequenzintervall, das gleich wie einige Kanälen der Spektralanalyse ist, entspricht, wobei jede Domäne auf ein Fenster ($F_{m,i,j}$) eines gefalteten Bands gefaltet ist, das mit dem Empfangskanal *m* assoziiert ist, jedes Fenster umfassend *L* Felder, wobei die Domäne des ersten Signals als erste Domäne bezeichnet wird und die Domäne des zweiten Signals als zweite Domäne bezeichnet wird;

- Entnehmen (132), in den M Zeit-/Frequenzgittern, die zu einem laufenden Zeitpunkt von jedem der Empfangskanäle geliefert werden, der Messungen der Felder der Fenster (F1m), die mit dem ersten Bereich assoziiert sind, und der Messungen der Felder der Fenster (F2m), die mit dem zweiten Bereich assoziiert sind, und Erstellen von Messvektoren anhand der entnommenen Messungen, sodass: die Messungen des ersten Signals (S1) auf den ungemischten Kanälen in die Form von *L* ersten Messvektoren ($CX_l$) gebracht werden; die Messungen des zweiten Signals (S2) auf den ungemischten Kanälen in die Form von *L* zweiten Messvektoren ($CZ_l$) gebracht werden; und die Messungen auf dem Mischkanal *L* Skalaren ($y_l$) entsprechen;

- Schätzen (134) der komplexen Amplituden, bis auf einen Normalisierungskoeffizienten, des ersten Signals und des auf die ungemischten und normalisierten Kanäle reduzierten Richtungsvektors des ersten Signals nur anhand der ersten *L* Messvektoren ($CX_l$);

- Schätzen (135) der komplexen Amplituden, bis auf einen Normalisierungskoeffizienten, des zweiten Signals und des auf die ungemischten und normalisierten Kanäle reduzierten Richtungsvektors des zweiten Signals nur anhand der *L* zweiten Messvektoren ($CZ_l$);

- Berechnen (136) der interferometrischen Phasen des ersten und des zweiten Signals auf dem Mischkanal anhand der geschätzten komplexen Amplituden für das erste und zweite Signal und anhand der Messungen auf dem Mischkanal, wobei davon ausgegangen wird, dass die Messungen auf dem Mischkanal der Überlagerung entsprechen: entweder in einem ersten Fall das Muster des unteren Seitenstreifens ($S_1^-$) des ersten Signals und das Muster des unteren Seitenstreifens ($S_2^-$) des zweiten Signals; oder in einem zweiten Fall das Muster des unteren Seitenstreifens ($S_1^-$) des ersten Signals und das Muster des oberen Seitenstreifens ($S_2^+$) des zweiten Signals; oder in einem dritten Fall das Muster des oberen Seitenstreifens ($S_1^+$) des ersten Signals und das Muster des unteren Seitenstreifens ($S_2^-$) des zweiten Signals; oder in einem vierten Fall des Musters des oberen Seitenstreifens ($S_1^+$) des ersten Signals und des Musters des oberen Seitenstreifens ($S_2^+$) des zweiten Signals, und Berechnen des Moduls des Richtungsvektors, der auf die Nicht-Mischkanälen reduziert ist, und der Amplitude der Komponente des Richtungsvektors auf dem Mischkanal, für das erste bzw. zweite Signal; und

- Bestimmen (140) der Ankunftsrichtung des ersten und des zweiten Signals jeweils aus den interferometrischen Phasen oder aus den geschätzten Richtungsvektoren für das erste und das zweite Signal.

2. Verfahren nach Anspruch 1, wobei:

- wenn die Messungen auf einem ungemischten Kanal dem Muster des unteren Seitenbands des ersten Signals bzw. des zweiten Signals entsprechen, die aus den Messungen erstellten Messvektoren die konjugierten Komplexe der Messungen enthalten; und,

- wenn die Messungen auf einem ungemischten Kanal dem Muster des oberen Seitenbands des ersten Signals bzw. des zweiten Signals entsprechen, enthalten die aus den Messungen erstellten Messvektoren diese Messungen.

3. Verfahren nach Anspruch 2, wobei die Schritte zum Schätzen des ersten und des zweiten Signals auf den M - 1 ungemischten Kanälen auf den folgenden Gleichungen beruhen:

$$\begin{cases} CX_l = s_l U_1 + W_{1l} \\ CZ_l = s_l' U_2 + W_{3l} \end{cases} , l \in [1, L]$$

wobei: $CX_l$ die ersten Messvektoren sind; $CZ_l$ die zweiten Messvektoren sind; $s_l$ und $s_l'$ die komplexen Amplituden des ersten Signals bzw. des zweiten Signals sind; $U_1$ und $U_2$ die Richtungsvektoren sind, die auf die ungemischten Kanäle reduziert sind; und $W_{1l}$, $W_{3l}$ Gaußsche, zentrierte, in I und untereinander unabhängige Geräusche sind.

4. Verfahren nach Anspruch 3, wobei, da $U_1$ und $U_2$ nicht normalisiert sind, normalisierte Vektoren $A_1$ und $A_2$ und die positiven Reellen $\mu_1$ und $\mu_2$ eingeführt werden, sodass $U_1 = \mu_1 A_1$, $U_2 = \mu_2 A_2$, und die Schätzschritte aus folgendem bestehen:

- Diagonalisieren die Matrix $Cov_1$, die wie folgt definiert ist:

$$\mathrm{Cov}_1 = \sum_{l=1}^{L}(CX_l)(CX_l^*)$$

- Bestimmen des Eigenvektors, der mit dem größten Eigenwert der Matrix $\mathrm{Cov}_1$ als Schätzung $\hat{A}_1$ des Vektors $A_1$ assoziiert ist;
- Bestimmen der komplexen Amplituden $s_l$ des ersten Signals, gefiltert auf den M - 1 Kanälen ohne Mischung, bis auf einen positiven reellen Faktor $\mu_1$, durch Berechnen der Größen $\xi_l$ aus dem hermiteschen Skalarprodukt der Vektoren $\hat{A}_1$ und $CX_l$ gemäß dem folgenden Verhältnis:

$$\xi_l = \hat{A}_1^* CX_l (= \widehat{\mu_1 s_l})$$

- Diagonalisieren die Matrix $\mathrm{Cov}_2$, die wie folgt definiert ist:

$$\mathrm{Cov}_2 = \sum_{l=1}^{L}(CZ_l)(CZ_l^*)$$

- Bestimmen des Eigenvektors, der mit dem größten Eigenwert der Matrix $\mathrm{Cov}_2$ als Schätzung $\hat{A}_2$ des Vektors $A_2$ assoziiert ist;
- Bestimmen der komplexen Amplituden $s_l$ des zweiten Signals, gefiltert auf den M - 1 Kanälen ohne Mischung, bis auf einen positiven reellen Faktor $\mu_2$, durch Berechnen der Größen $\eta_l$ aus dem hermiteschen Skalarprodukt der Vektoren $\hat{A}_2$ und $CZ_l$ gemäß dem folgenden Verhältnis:

$$\eta_l = \hat{A}_2^* CZ_l (= \widehat{\mu_2 s_l'})$$

5. Verfahren nach Anspruch 4, wobei ein Berechnen (136) der interferometrischen Phasen $\varphi$ und $\psi$ auf dem Mischkanal, jeweils des ersten Signals und des zweiten Signals, darin besteht, das Paar der Größen $z_1$, $z_2$ zu schätzen, die durch Folgendes definiert sind:

im ersten Fall: $\quad z_1 = \dfrac{v_1 e^{-i\varphi}}{\mu_1} \quad$ und $\quad z_2 = \dfrac{v_2 e^{-i\psi}}{\mu_2}$,

im zweiten Fall: $\quad z_1 = \dfrac{v_1 c^{-i\varphi}}{\mu_1} \quad$ und $\quad z_2 = \dfrac{v_2 e^{+i\psi}}{\mu_2}$,

im dritten Fall: $\quad z_1 = \dfrac{v_1 e^{+i\varphi}}{\mu_1} \quad$ und $\quad z_2 = \dfrac{v_2 e^{-i\psi}}{\mu_2}$,

im vierten Fall: $\quad z_1 = \dfrac{v_1 e^{+i\varphi}}{\mu_1} \quad$ und $\quad z_2 = \dfrac{v_2 e^{+i\psi}}{\mu_2}$,

wobei $v_1$ und $v_2$ die Amplitude der Komponente des Richtungsvektors auf dem Mischkanal, jeweils des ersten Signals und des zweiten Signals, sind,
durch Suchen des Paars $\hat{z}_1$, $\hat{z}_2$, das den quadratischen Fehler minimiert: $|y_l - z_1\xi_l - z_2\eta_l|^2$ wobei $y_l$ die Messungen auf der Mischspur sind.

6. Verfahren nach Anspruch 5, wobei das Verfahren nach dem Schritt (136) des Schätzens der interferometrischen Phasen des ersten und des zweiten Signals ferner einen Schritt (138) eines Schätzens der Amplitude $\mu_1$ bzw. der Amplitude $\mu_2$ des Richtungsvektors des ersten Signals bzw. des zweiten Signals, reduziert auf die Nicht-Mischkanäle, und der Amplitude $v_1$ bzw. der Amplitude $v_2$ der Komponente des Richtungsvektors des ersten Signals bzw. des zweiten Signals auf dem Mischkanal Folgendes umfasst: $\quad \hat{\mu}_1 = \dfrac{1}{\sqrt{1+|\hat{z}_1^2|}} \quad \hat{v}_1 = \dfrac{|\hat{z}_1|}{\sqrt{1+|\hat{z}_1^2|}} \quad \hat{\mu}_2 = \dfrac{1}{\sqrt{1+|\hat{z}_2^2|}}$, und

$$\hat{v}_2 = \dfrac{|\hat{z}_2|}{\sqrt{1+|\hat{z}_2^2|}},$$

7. Verfahren nach Anspruch 6, bestehend aus einem Berechnen der Schätzungen der normalisierten Richtungsvektoren gemäß den folgenden Verhältnissen:

in dem ersten Fall:
$$\widehat{V}_1 = \begin{pmatrix} \hat{\mu}_1 \widehat{A}_1 \\ \hat{v}_1 e^{-i\hat{\varphi}} \end{pmatrix}, \quad \widehat{V}_2 = \begin{pmatrix} \hat{\mu}_2 \widehat{A}_2 \\ \hat{v}_2 e^{-i\hat{\psi}} \end{pmatrix}$$

in dem zweiten Fall:
$$\widehat{V}_1 = \begin{pmatrix} \hat{\mu}_1 \widehat{A}_1 \\ \hat{v}_1 e^{-i\hat{\varphi}} \end{pmatrix}, \quad \widehat{V}_2 = \begin{pmatrix} \hat{\mu}_2 \widehat{A}_2 \\ \hat{v}_2 e^{i\hat{\psi}} \end{pmatrix}$$

in dem dritten Fall:
$$\widehat{V}_1 = \begin{pmatrix} \hat{\mu}_1 \widehat{A}_1 \\ \hat{v}_1 e^{i\hat{\varphi}} \end{pmatrix}, \quad \widehat{V}_2 = \begin{pmatrix} \hat{\mu}_2 \widehat{A}_2 \\ \hat{v}_2 e^{-i\hat{\psi}} \end{pmatrix}$$
in dem vierten Fall:
$$\widehat{V}_1 = \begin{pmatrix} \hat{\mu}_1 \widehat{A}_1 \\ \hat{v}_1 e^{i\hat{\varphi}} \end{pmatrix}, \quad \widehat{V}_2 = \begin{pmatrix} \hat{\mu}_2 \widehat{A}_2 \\ \hat{v}_2 e^{i\hat{\psi}} \end{pmatrix}$$

8. Computerprogrammprodukt, umfassend Anweisungen, die, wenn sie von einem Computer ausgeführt werden, geeignet sind, ein Verfahren auszuführen, **dadurch gekennzeichnet, dass** das Verfahren ein Verfahren nach einem der Ansprüche 1 bis 7 ist.

9. Interferometrischer Goniometer (10), der Goniometer umfassend M Empfangskanäle, wobei M eine ganze Zahl größer als oder gleich wie 4 ist, wobei jeder Empfangskanal nacheinander eine Antenne ($12_m$), ein analoges Empfangsmodul ($14_m$) und ein digitales Empfangsmodul ($20_m$) umfasst, wobei das digitale Empfangsmodul mit einer ihm eigenen Abtastfrequenz ($fe_m$) arbeitet und periodisch ein Zeit-Frequenz-Gitter ($G_m$) liefert, wobei jedes Feld des Zeit-Frequenz-Gitters eine komplexe Messung enthält, wobei der Zeit/Frequenz-Raum in Domänen ($D_{i,k}$) unterteilt ist, wobei eine Domäne auf ein Fenster ($F_{m,i,j}$) eines gefalteten Bands gefaltet ist, das mit dem Empfangskanal $m$, assoziiert ist, wobei ein Fenster $L$ Felder umfasst, **dadurch gekennzeichnet, dass** es angepasst ist, um die Anweisungen eines Computerprogrammprodukts gemäß Anspruch 8 auszuführen.

**Claims**

1. A method (100) of separating and estimating the directions of arrival of electromagnetic signals implemented by a wideband interferometric goniometer with subsampled digital reception,

   said interferometric goniometer comprising M reception channels, M being an integer greater than or equal to 4, each reception channel successively comprising an antenna ($12_m$), an analog reception module ($14_m$) and a digital reception module ($20_m$), the digital reception module operating at a sampling frequency ($fe_m$) of its own and periodically delivering a time-frequency grid ($G_m$) by successive spectral analyses, each cell of the time-frequency grid containing a complex measurement,
   **characterized in that**, in a situation of interference of a first real signal ($S_1$) by a second signal ($S_2$), the first signal and the second signal having carrier frequencies whose difference or sum is close to a multiple of the sampling frequency of one of the reception channels, called the mixing channel, the other channels among the reception channels being called the unmixed channels, the method includes the steps consisting of:

   - defining (105) time/frequency domains ($D_{i,k}$) in time/frequency space, each domain corresponding to the Cartesian product of a time interval equal to the duration of a few successive spectral analyses, by a frequency interval equal to a few channels of the spectral analysis, each domain being folded over a window ($F_{m,i,j}$) of a folded band associated with the reception channel m, each window comprising L cells, the domain of the first signal being referred to as the first domain and the domain of the second signal being referred to as the second domain;
   - sampling (132), in the M time/frequency grids delivered at a current instant by each of the reception channels, the measurements of the boxes of the windows (F1m) associated with the first domain and the measurements of the boxes of the windows (F2m) associated with the second domain, and generating measurement vectors from the sampled measurements so that: the measurements of the first signal (S1) on the unmixed channels are formed into $L$ first measurement vectors ($CX_l$); the measurements of the second signal (S2) on the unmixed channels are formed into $L$ second measurement vectors ($CZ_l$); and the measurements on the mixing channel correspond to $L$ scalars ($y_l$);
   - estimating (134) the complex amplitudes, to within one normalisation coefficient, of the first signal, and the directional vector reduced to the unmixed and normalised channels of the first signal, only from the first

$L$ measurement vectors ($CX_l$);

- estimating (135) the complex amplitudes, to within one normalisation coefficient, of the second signal, and the directional vector reduced to the unmixed and normalised channels of the second signal, only from the $L$ second measurement vectors ($CZ_l$);

- calculating (136) the interferometric phases of the first and second signals on the mixing channel from the complex amplitudes estimated for the first and second signals and from the measurements on the mixing channel, considering that the measurements on the mixing channel correspond to the superposition of: either in a first case, the lower sideband pattern ($S_1^-$) of the first signal and the lower sideband pattern ($S_2^-$) of the second signal; or in a second case, the lower sideband pattern ($S_1^-$) of the first signal and the upper sideband pattern ($S_2^+$) of the second signal; or in a third case, the upper sideband pattern ($S_1^+$) of the first signal and the lower sideband pattern ($S_2^-$) of the second signal; or in a fourth case, the upper sideband pattern ($S_1^+$) of the first signal and the upper sideband pattern ($S_2^+$) of the second signal, and calculating the modulus of the directional vector reduced to the unmixed channels, and the amplitude of the component of the directional vector on the mixing channel,

for the first and second signals respectively; and,

- determining (140) the direction of arrival of the first and second signals respectively from the interferometric phases or from the directional vectors estimated for the first and second signals.

2. The method according to claim 1, wherein:

- if the measurements on an unmixed channel correspond to the lower sideband pattern of the first signal, respectively the second signal, the measurement vectors derived from said measurements contain the conjugate complexes of said measurements; and
- if the measurements on an unmixed channel correspond to the upper sideband pattern of the first signal, respectively the second signal, the measurement vectors derived from said measurements contain said measurements.

3. The method according to claim 2, wherein the steps of estimating the first and second signals on the M - 1 unmixed channels are based on the following equations:

$$\begin{cases} CX_l = s_l U_1 + W_{1l} \\ CZ_l = s_l' U_2 + W_{3l} \end{cases}, l \in [1, L]$$

where: $CX_l$ are the first measurement vectors; $CZ_l$ are the second measurement vectors; $s_l$ and $s_l'$ are the complex amplitudes of the first and second signals respectively; $U_1$ and $U_2$ are the directional vectors reduced to the unmixed channels; and $W_{1l}$, $W_{3l}$ are Gaussian, centred noises that are independent in l and between them.

4. The method according to claim 3, wherein, $U_1$ and $U_2$ being unnormed, normed vectors $A_1$ and $A_2$ and the positive real factors $\mu_1$ and $\mu_2$ are introduced, such that $U_1 = \mu_1 A_1$, $U_2 = \mu_2 A_2$, and the estimating steps consist of:

- diagonalizing the matrix Cov, defined as:

$$Cov_1 = \sum_{l=1}^{L}(CX_l)(CX_l^*)$$

- determining the eigenvector associated with the largest eigenvalue of the matrix Cov, as an estimate $\hat{A}_1$ of the vector $A_1$;
- determining the complex amplitudes $s_l$ of the first signal, filtered on the M - 1 unmixed channels, to within one positive real factor, $\mu_1$, by calculating the quantities $\xi_l$ from the Hermitian scalar product of the vectors $\hat{A}_1$ and $CX_l$ according to the relationship:

$$\xi_l = \hat{A}_1^* CX_l (= \widehat{\mu_1 s_l})$$

- diagonalizing the matrix $Cov_2$ defined as:

$$\mathrm{Cov}_2 = \sum_{l=1}^{L}(CZ_l)(CZ_l^*)$$

- determining the eigenvector associated with the largest eigenvalue of the matrix $\mathrm{Cov}_2$ as an estimate $\hat{A}_2$ of the vector $A_2$;
- determining the complex amplitudes $s'_l$ of the second signal, filtered on the M - 1 unmixed channels, to within one positive real factor, $\mu_2$, by calculating the quantities $\eta_l$ from the Hermitian scalar product of the vectors $\hat{A}_2$ and $CZ_l$ according to the relationship:

$$\eta_l = \hat{A}_2^* CZ_l (= \widehat{\mu_2 s'_l})$$

5. The method according to claim 4, wherein calculating (136) the interferometric phases $\varphi$ and $\psi$ on the mixing channel of the first signal and the second signal respectively, consists of estimating the pair of quantities $z_1$, $z_2$, which are defined by:

in the first case: $z_1 = \dfrac{v_1 e^{-i\varphi}}{\mu_1}$ and $z_2 = \dfrac{v_2 e^{-i\psi}}{\mu_2}$ ,

in the second case: $z_1 = \dfrac{v_1 e^{-i\varphi}}{\mu_1}$ and $z_2 = \dfrac{v_2 e^{+i\psi}}{\mu_2}$ ,

in the third case: $z_1 = \dfrac{v_1 e^{+i\varphi}}{\mu_1}$ and $z_2 = \dfrac{v_2 e^{-i\psi}}{\mu_2}$ ,

in the fourth case: $z_1 = \dfrac{v_1 e^{+i\varphi}}{\mu_1}$ and $z_2 = \dfrac{v_2 e^{+i\psi}}{\mu_2}$ ,

where $v_1$ and $v_2$ are the amplitude of the component of the directional vector on the mixing channel of the first and second signal respectively,
by searching for the pair $\hat{z}_1$, $\hat{z}_2$ that minimises the square error: $|y_l - z_1 \xi_l - z_2 \eta_l|^2$ where $y_l$ are the measurements on the mixing channel.

6. The method according to claim 5, wherein, after the step (136) of estimating the interferometric phases of the first and second signals, the method further comprises a step (138) of estimating the amplitude $\mu_1$, respectively, the amplitude $\mu_2$, of the directional vector of the first signal, respectively, of the second signal, reduced to the unmixed channels, and the amplitude $v_1$, respectively, the amplitude $v_2$, respectively, of the component of the directional vector of the first signal, respectively, of the second signal, on the mixing channel:

$$\hat{\mu}_1 = \dfrac{1}{\sqrt{1+|\hat{z}_1^2|}}, \quad \hat{v}_1 = \dfrac{|\hat{z}_1|}{\sqrt{1+|\hat{z}_1^2|}}, \quad \hat{\mu}_2 = \dfrac{1}{\sqrt{1+|\hat{z}_2^2|}} \quad \text{and} \quad \hat{v}_2 = \dfrac{|\hat{z}_2|}{\sqrt{1+|\hat{z}_2^2|}},$$

7. The method according to claim 6, comprising calculating the estimates of the normed directional vectors according to the relationships:

in the first case: $\hat{V}_1 = \begin{pmatrix} \hat{\mu}_1 \hat{A}_1 \\ \hat{v}_1 e^{-i\hat{\varphi}} \end{pmatrix}$, $\hat{V}_2 = \begin{pmatrix} \hat{\mu}_2 \hat{A}_2 \\ \hat{v}_2 e^{-i\hat{\psi}} \end{pmatrix}$

in the second case: $\hat{V}_1 = \begin{pmatrix} \hat{\mu}_1 \hat{A}_1 \\ \hat{v}_1 e^{-i\hat{\varphi}} \end{pmatrix}$, $\hat{V}_2 = \begin{pmatrix} \hat{\mu}_2 \hat{A}_2 \\ \hat{v}_2 e^{i\hat{\psi}} \end{pmatrix}$

in the third case: $\hat{V}_1 = \begin{pmatrix} \hat{\mu}_1 \hat{A}_1 \\ \hat{v}_1 e^{i\hat{\varphi}} \end{pmatrix}$, $\hat{V}_2 = \begin{pmatrix} \hat{\mu}_2 \hat{A}_2 \\ \hat{v}_2 e^{-i\hat{\psi}} \end{pmatrix}$

in the fourth case: $\hat{V}_1 = \begin{pmatrix} \hat{\mu}_1 \hat{A}_1 \\ \hat{v}_1 e^{i\hat{\varphi}} \end{pmatrix}$, $\hat{V}_2 = \begin{pmatrix} \hat{\mu}_2 \hat{A}_2 \\ \hat{v}_2 e^{i\hat{\psi}} \end{pmatrix}$

8. A computer program product, comprising instructions suitable, when executed by a computer, for implementing a method, **characterised in that** said method is a method according to any one of claims 1 to 7.

9. The interferometric goniometer (10), said goniometer comprising M reception channels, M being an integer greater than or equal to 4, each reception channel comprising successively an antenna ($12_m$), an analogue reception module ($14_m$) and a digital reception module ($20_m$), the digital reception module operating at its own sampling frequency ($fe_m$) and periodically delivering a time-frequency grid ($G_m$), **characterized in that** each cell of the time/frequency grid containing a complex measurement, the time/frequency space being subdivided into domains ($D_{i,k}$), a domain being folded over a window ($F_{m,i,j}$) of a folded band associated with the reception channel m, a window comprising L cells, **characterised in that** it is adapted to execute the instructions of a computer program product in accordance with claim 8.

FIG. 1

FIG. 2

FIG. 3

EP 3 971 600 B1

FIG. 4

FIG. 5

FIG. 6

FIG. 7

FIG. 8

FIG. 9

Détection des domaines comportant un signal d'intérêt — 90

B

Définition des domaines et des fenêtres — 105

Supervision : détermination des domaines à traiter — 110

Situation 1 : domaines sans mélange

Situation 2 : mélange de deux signaux sur une seule voie

Situation 3 : autres situations de parasitage

130

Elaboration des mesures : $L$ vecteurs $CX_l$, $L$ vecteurs $CY_l$, $L$ scalaires $z_l$ — 132

Estimation des $s_l$ et de $A_1$ — 134

Estimation des $s'_l$ et de $A_2$ — 135

Estimation de $\varphi$ et de $\psi$ — 136

Estimation de $\mu_1$, $\nu_1$, $\mu_2$, $\nu_2$ — 138

Estimation DOA1 et DOA2 — 140

100

Estimation DOA monosignal — 120

Arrêt du traitement — 150

FIG. 10

EP 3 971 600 B1

FIG. 11

FIG. 11 (fin)

**EP 3 971 600 B1**

## RÉFÉRENCES CITÉES DANS LA DESCRIPTION

**Documents brevets cités dans la description**

- EP 3671250 A

- FR 1873938